# EUROPEAN PATENT APPLICATION

(11) **EP 4 790 707 A1**
(43) Date of publication of application: **12.08.2026**
(21) Application number: 24910134.6
(22) Date of filing: 10.10.2024
(51) Int. Cl.: G10L 19/008, G10L 19/16

(54) **AUDIO CODING AND DECODING SYSTEM TRAINING METHOD AND APPARATUS, AUDIO CODING METHOD AND APPARATUS, AUDIO DECODING METHOD AND APPARATUS, ELECTRONIC DEVICE, COMPUTER-READABLE STORAGE MEDIUM, AND COMPUTER PROGRAM PRODUCT**

(30) Priority: 26.12.2023 CN 202311832234
(71) Applicant: Tencent Technology (Shenzhen) Company Limited, Shenzhen, Guangdong 518057 (CN)
(72) Inventor: XIAO, Wei, Shenzhen, Guangdong 518057 (CN)
(74) Representative: Gunzelmann, Rainer
(86) International application number: PCT/CN2024/124001
(87) International publication number: WO 2025/139192

(57) **Abstract**

A training method and apparatus for an audio encoding/decoding system, an audio encoding method and apparatus, an audio decoding method and apparatus, an electronic device, a computer-readable storage medium, and a computer program product are provided. The training method for the audio encoding/decoding system includes: acquiring a first audio encoding/decoding system, the first audio encoding/decoding system including a first encoding network and a first decoding network; generating a to-be-trained second encoding network corresponding to the first encoding network in response to a configuration request for the first encoding network; encoding a first audio sample based on the to-be-trained second encoding network, to obtain an audio bitstream sample of the first audio sample, and decoding the audio bitstream sample based on the first decoding network, to obtain a reconstructed audio sample of the first audio sample; and updating parameters of the to-be-trained second encoding network based on the reconstructed audio sample, to obtain a trained second encoding network.

## Description

### RELATED APPLICATION

Embodiments of this application are proposed based on and claim priority to Chinese Patent Application No. 202311832234.8, filed on December 26, 2023.

### FIELD OF THE TECHNOLOGY

This application relates to the field of artificial intelligence (AI) technologies, and in particular, to a training method and apparatus for an audio encoding/decoding system, an audio encoding method and apparatus, an audio decoding method and apparatus, an electronic device, a computer-readable storage medium, and a computer program product.

### BACKGROUND OF THE DISCLOSURE

An audio encoding/decoding technology is one of important applications in the field of artificial intelligence. The audio encoding/decoding technology is a core technology in communication services including remote audio/video calls. A speech encoding technology, in simple terms, aims to transmit speech information as much as possible by using minimal network bandwidth resources. From the perspective of Shannon's Information Theory, speech encoding is a type of source encoding. An objective of source encoding is to compress data volume of information to be transmitted as much as possible on an encoder side by removing redundancy from information, while enabling lossless (or nearly lossless) recovery on a decoder side.

In the related art, an encoding network and a decoding network in an audio encoding/decoding system require excessively long training periods and excessively high upgrade costs, thereby failing to meet user requirements.

### SUMMARY

Embodiments of this application provide a training method and apparatus for an audio encoding/decoding system, an audio encoding method and apparatus, an audio decoding method and apparatus, an electronic device, a computer-readable storage medium, and a computer program product, which can shorten a training period of the audio encoding/decoding system.

Technical solutions in the embodiments of this application are implemented as follows:

An embodiment of this application provides a training method for an audio encoding/decoding system, applied to an electronic device, and including:
acquiring a first audio encoding/decoding system, the first audio encoding/decoding system including a first encoding network and a first decoding network;
generating a to-be-trained second encoding network corresponding to the first encoding network in response to a configuration request for the first encoding network;
encoding a first audio sample using the to-be-trained second encoding network to obtain an audio bitstream sample of the first audio sample, and decoding the audio bitstream sample using the first decoding network to obtain a reconstructed audio sample of the first audio sample; and
updating parameters of the to-be-trained second encoding network based on the reconstructed audio sample to obtain a trained second encoding network.

An embodiment of this application provides an audio encoding method, applied to an electronic device, and including:
acquiring an audio signal;
invoking a trained second encoding network in an audio encoding/decoding system to perform network encoding on the audio signal, to obtain a second encoding feature of the audio signal, the audio encoding/decoding system including the trained second encoding network and a first decoding network; and
performing signal encoding on the second encoding feature of the audio signal to obtain a second audio bitstream of the audio signal,
where both the first audio bitstream and the second audio bitstream can be decoded by the first decoding network to obtain a reconstructed audio signal corresponding to the audio signal, the first audio bitstream is obtained by processing the audio signal through the first encoding network, and the trained second encoding network is obtained by training the first encoding network by using the foregoing training method for the audio encoding/decoding system.

An embodiment of this application provides an audio decoding method, applied to an electronic device, and including:
acquiring an audio bitstream;
performing signal decoding on the audio bitstream to obtain an encoding feature estimation value corresponding to the audio bitstream; and
invoking a first decoding network in an audio encoding/decoding system to perform network decoding on the encoding feature estimation value, to obtain a reconstructed audio signal corresponding to the audio bitstream,
where the audio encoding/decoding system includes a trained second encoding network and the first decoding network, the audio bitstream is obtained by processing an audio signal through the trained second encoding network or a first encoding network, and the trained second encoding network is obtained by training the first encoding network by using the foregoing training method for the audio encoding/decoding system.

An embodiment of this application provides a training apparatus for an audio encoding/decoding system, including:
a first acquiring module, configured to acquire a first audio encoding/decoding system, the first audio encoding/decoding system including a first encoding network and a first decoding network;
a determining module, configured to generate a to-be-trained second encoding network corresponding to the first encoding network in response to a configuration request for the first encoding network; and
a training module, configured to encode a first audio sample using the to-be-trained second encoding network to obtain an audio bitstream sample of the first audio sample, and decode the audio bitstream sample using the first decoding network to obtain a reconstructed audio sample of the first audio sample; and
update parameters of the to-be-trained second encoding network based on the reconstructed audio sample to obtain a trained second encoding network.

An embodiment of this application provides an audio encoding apparatus, including:
a second acquiring module, configured to acquire an audio signal;
an encoding module, configured to invoke a trained second encoding network in an audio encoding/decoding system to perform network encoding on the audio signal, to obtain a second encoding feature of the audio signal, the audio encoding/decoding system including the trained second encoding network and a first decoding network; and
a signal encoding module, configured to perform signal encoding on the second encoding feature of the audio signal to obtain a second audio bitstream of the audio signal,
where both the first audio bitstream and the second audio bitstream can be decoded by the first decoding network to obtain a reconstructed audio signal corresponding to the audio signal, the first audio bitstream is obtained by processing the audio signal through the first encoding network, and the trained second encoding network is obtained by training the first encoding network by using the foregoing training method for the audio encoding/decoding system.

An embodiment of this application provides an audio decoding apparatus, including:
a third acquiring module, configured to acquire an audio bitstream;
a signal decoding module, configured to perform signal decoding on the audio bitstream to obtain an encoding feature estimation value corresponding to the audio bitstream; and
a decoding module, configured to invoke a first decoding network in an audio encoding/decoding system to decode the encoding feature estimation value, to obtain a reconstructed audio signal corresponding to the audio bitstream,
where the audio encoding/decoding system includes a trained second encoding network and the first decoding network, the audio bitstream is obtained by processing an audio signal through the trained second encoding network or a first encoding network, and the trained second encoding network is obtained by training the first encoding network by using the foregoing training method for the audio encoding/decoding system.

An embodiment of this application provides an electronic device, including:
a memory, configured to store a computer program or computer-executable instructions; and
a processor, configured to implement the training method for the audio encoding/decoding system, or the audio encoding method, or the audio decoding method provided in the embodiments of this application when executing the computer program or the computer-executable instructions stored in the memory.

An embodiment of this application provides a computer-readable storage medium, having computer-executable instructions stored therein, the computer-executable instructions, when executed by a processor, implementing the training method for the audio encoding/decoding system, or the audio encoding method, or the audio decoding method provided in the embodiments of this application.

An embodiment of this application provides a computer program product, including computer-executable instructions, the computer-executable instructions, when executed by a processor, implementing the training method for the audio encoding/decoding system, or the audio encoding method, or the audio decoding method provided in the embodiments of this application.

The embodiments of this application have the following beneficial effects:

When the audio encoding/decoding system is trained, the parameters of the first decoding network remain unchanged, and only the parameters of the to-be-trained second encoding network are updated, so that a training process for the first decoding network is omitted. Compared with the related art in which the first decoding network and the to-be-trained second encoding network are trained at the same time, a training period for the audio encoding/decoding system can be shortened, thereby reducing the upgrade cost of the encoding network in the audio encoding/decoding system, to meet actual application requirements of users; and moreover, by remaining the parameters of the first decoding network unchanged and training the second encoding network, the bitstream obtained through processing by using the trained second encoding network can be correctly decoded by the first decoding network. Since the bitstream obtained through processing by using the first encoding network can further be correctly decoded by the first decoding network, forward compatibility of the audio encoding/decoding system is ensured.

### BRIEF DESCRIPTION OF THE DRAWINGS

FIG. 1 is a schematic diagram of spectral comparison at different bit rates according to an embodiment of this application.
FIG. 2A is a schematic diagram of a training platform for an audio encoding/decoding system according to an embodiment of this application.
FIG. 2B is a schematic diagram of an architecture of an audio encoding/decoding system according to an embodiment of this application.
FIG. 3A is a schematic structural diagram of an electronic device according to an embodiment of this application.
FIG. 3B is a schematic structural diagram of an electronic device according to an embodiment of this application.
FIG. 3C is a schematic structural diagram of an electronic device according to an embodiment of this application.
FIG. 4A to FIG. 4H are schematic flowcharts of a training method for an audio encoding/decoding system according to an embodiment of this application.
FIG. 5 is a schematic flowchart of an audio encoding method according to an embodiment of this application.
FIG. 6A is a schematic flowchart of an audio decoding method according to an embodiment of this application.
FIG. 6B is a schematic diagram of a speech communication link according to an embodiment of this application.
FIG. 7 is a schematic flowchart of a training method for an audio encoding/decoding system according to an embodiment of this application.
FIG. 8A is a schematic diagram of a conventional convolution network according to an embodiment of this application.
FIG. 8B is a schematic diagram of a dilated convolution network according to an embodiment of this application.
FIG. 9 is a schematic diagram of a first encoding network according to an embodiment of this application.
FIG. 10A is a schematic structural diagram of a residual block used in an encoding block according to an embodiment of this application.
FIG. 10B is a schematic structural diagram of a residual unit according to an embodiment of this application.
FIG. 11 is a schematic diagram of a first decoding network according to an embodiment of this application.
FIG. 12 is a schematic diagram of a second encoding network according to an embodiment of this application.

### DESCRIPTION OF EMBODIMENTS

To make the objectives, technical solutions, and advantages of this application clearer, the following describes this application in further detail with reference to the accompanying drawings. The described embodiments are not to be considered as a limitation to this application. All other embodiments obtained by a person of ordinary skill in the art without creative efforts shall fall within the protection scope of this application.

In the following descriptions, the terms "first" and "second" are merely intended to distinguish between similar objects rather than describing a specific order of objects. The terms "first" and "second" may, where permitted, be interchangeable in a particular order or sequence, so that the embodiments of this application described herein can be performed in an order other than that illustrated or described herein.

In the following description, the term "some embodiments" describes subsets of all possible embodiments, but "some embodiments" may be the same subset or different subsets of all the possible embodiments, and can be combined with each other without conflict.

In the embodiments of this application, the term "module" or "unit" refers to a computer program having a preset function or a part of a computer program, and works together with other relevant parts to achieve a preset objective, and may be all or partially implemented by using software, hardware (such as a processing circuit or a memory), or a combination thereof. Similarly, one processor (or a plurality of processors or memories) may be configured to implement one or more modules or units. In addition, each module or unit may be a part of an integrated module or unit including a function of the module or unit.

Unless otherwise defined, meanings of all technical and scientific terms used in this specification are the same as those usually understood by a person skilled in the art to which this application belongs. Terms used herein are merely intended to describe objectives of the embodiments of this application, but are not intended to limit this application.

Before the embodiments of this application are further described in detail, a description is made of nouns and terms in the embodiments of this application, and the nouns and terms in the embodiments of this application are applicable to the following explanations.
(1) A neural network (NN) is an algorithmic mathematical model that imitates behavior features of animal neural networks to perform distributed parallel information processing. The neural network may process information by adjusting mutual connection relationships among a large number of internal nodes.
(2) Deep learning (DL) is a novel research area in the field of machine learning (ML). The deep learning is to learn an inherent law and representational hierarchies of sample data, and information obtained during these learning processes greatly facilitates the interpretation of data such as text, images, and voice. A final objective of the deep learning is to enable a machine to have an analysis and learning capability like a person, and to recognize data such as text, images, and voice.
(3) Quantization is a process of approximating consecutive values (or a large number of discrete values) of a signal to a limited number of (or fewer) discrete values. Quantization includes vector quantization (VQ) and scalar quantization.

The vector quantization is an effective lossy compression technology, with a theoretical basis in Shannon's rate-distortion theory. A basic principle of vector quantization is to replace an input vector with an index (alternatively referred to as a quantization value) of a codeword best matching the input vector in a code-book for transmission and storage, and only a simple code-book look-up operation is required during decoding. For example, a plurality of pieces of scalar data is formed into a vector space, the vector space is divided into a plurality of small areas, and during quantization, a vector falling into a small area is replaced with a corresponding index.

Scalar quantization is to perform quantization on a scalar, namely, one-dimensional vector quantization. A dynamic range is divided into several small intervals, and each small interval has a representative value (i.e., an index). When an input signal falls within a particular interval, the input signal is quantized into the representative value.

(4) Entropy encoding: in an encoding process, a lossless encoding manner, which is performed in accordance with a principle of entropy without losing any information, further serves as a critical module in lossy encoding and is located at an end of an encoder. Entropy encoding includes Shannon encoding, Huffman encoding, Exp-Golomb encoding, and arithmetic encoding.

(5) A quadrature mirror filter (QMF) set is a filter pair including analysis and synthesis, where a QMF analysis filter is configured for sub-band signal decomposition, to reduce a signal bandwidth, so that each sub-band signal may be successfully processed through a respective channel; and a QMF synthesis filter is configured to synthesize the sub-band signals restored on a decoder side, for example, reconstruct an original audio signal in a manner such as zero-value interpolation or band-pass filtering.

The speech encoding technology employs minimum network bandwidth resources to transmit maximum information. A compression rate of a speech may reach up to 10 times, to be specific, speech data originally sized at 10 MB, after being compressed by an encoder, requires only 1 MB for transmission, thereby significantly reducing the bandwidth resources consumed for information transmission. For example, for a wide-band speech signal with a sampling rate of 16,000 Hz and a 16-bit sampling depth (defining precision of recording a speech amplitude during sampling), a bit rate (data volume transmitted per unit time) of an uncompressed version is 256 kbps; and by employing the speech encoding technology, even in a lossy encoding mode, the quality of a reconstructed speech signal can be approximate to that of the uncompressed version within a bit rate range of 10 to 20 kbps, and the reconstructed speech signal may even be perceived as audibly indistinguishable. If a service with a higher sampling rate is required, for example, an ultra-wide-band speech at 32,000 Hz, a bit rate range reaches up to 30 kbps.

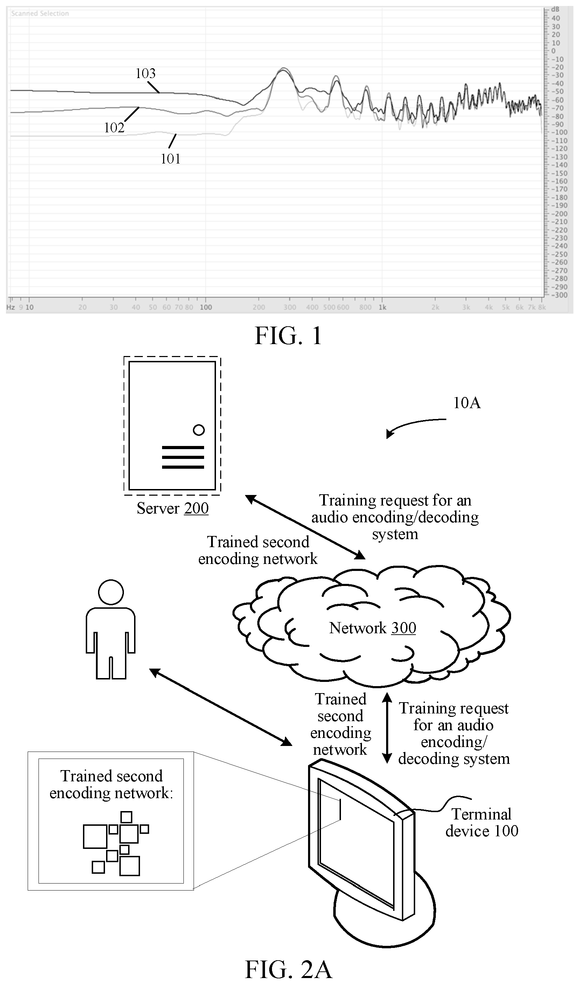

In communication systems, to ensure successful communication, the industry adopts standardized speech encoding/decoding protocols including standards from international and domestic organizations such as International Telecommunication Union - Telecommunication Standardization Sector (ITU-T), Third Generation Partnership Project (3GPP), Internet Engineering Task Force (IETF). Examples of the standards include the G.711, G.722, AMR series, EVS, and OPUS standards. FIG. 1 is a schematic diagram of spectral comparison at different bit rates, to demonstrate a relationship between a compression bit rate and quality. Curve 101 represents a spectral curve of an original speech, i.e., an uncompressed signal; Curve 102 represents a spectral curve obtained by an OPUS encoder at a bit rate of 20 kbps; and Curve 103 represents a spectral curve obtained by the OPUS encoder at a bit rate of 6 kbps. It can be seen from FIG. 1 that as an encoding bit rate increases, a compressed signal is closer to the original signal.

The principle of speech encoding generally proceeds as follows: the speech encoding may locally encode speech waveform samples directly one by one; or based on a human vocal principle, relevant low-dimensional features are extracted, and encoded by the encoder side, and the decoder side reconstructs a speech signal based on these parameters.

The foregoing encoding principle is derived from speech signal modeling, i.e., a signal processing-based compression method, which fails to ensure the encoding quality of the audio. In view of this, in this embodiment of this application, a deep learning-based technology is employed to improve encoding/decoding efficiency while ensuring the speech quality. Currently, the deep learning-based technology can indeed bring an effect of a low bit rate and high quality. However, this method alternatively has the following two typical problems:
(1) The encoding/decoding method has relatively high complexity. For some realtime audio and video application scenarios, excessively high complexity may impede the widespread promotion of audio applications. In addition, a deep learning-based encoding/decoding system has an excessively long training period, varying from several days to several weeks, and has a high iteration cost.
(2) To ensure a forward compatibility rule in the communication system, old versions of an encoder and a decoder can be replaced first, and then the encoder and the decoder are updated, resulting in substantial engineering reconstruction challenges.

To solve the aforementioned problems, embodiments of this application provide a training method and apparatus for an audio encoding/decoding system, an audio encoding method and apparatus, an audio decoding method and apparatus, an electronic device, a computer-readable storage medium, and a computer program product. The following describes an exemplary application of an electronic device provided in an embodiment of this application. The electronic device provided in the embodiment of this application may be implemented as a terminal device, or may be implemented as a server, or may be implemented through cooperation between a terminal device and a server.

The following describes an exemplary application of the electronic device provided in this embodiment of this application. The electronic device provided in the embodiments of this application may be implemented as various types of user terminals, such as a notebook computer, a tablet computer, a desktop computer, a set-top box, a mobile device (such as a mobile phone, a portable music player, a personal digital assistant, a dedicated messaging device, a portable gaming device, or an in-vehicle device), a smart-phone, a smart speaker, a smart watch, a smart television, and an in-vehicle terminal. The electronic device provided in this embodiment of this application may be implemented as an independent physical server, or may be a server cluster including multiple physical servers or a distributed system, or may be a cloud server providing basic cloud computing services, such as a cloud service, a cloud database, cloud computing, a cloud function, cloud storage, a network service, cloud communication, a middle-ware service, a domain name service, a security service, a content delivery network (CDN), big data, and an artificial intelligence platform.

FIG. 2A is a schematic diagram of an application scenario of a training platform 10A for an audio encoding/decoding system according to an embodiment of this application. A terminal device 100 is connected to a server 200 through a network 300. The network 300 may be a wide area network, a local area network, or a combination of the two.

The terminal device 100 (which may be configured to run a client, such as an audio client, and an in-vehicle client) may be configured to acquire a training request for an audio encoding/decoding system. For example, when a user loads a first audio encoding/decoding system (including a first encoding network and a first decoding network) by using the terminal 100, the terminal 100 automatically acquires the first audio encoding/decoding system and automatically generates the training request for the audio encoding/decoding system.

In some embodiments, the client running in the terminal device 100 may be implanted with a training plug-in for the audio encoding/decoding system, which is configured to enable local implementation of a training method for the audio encoding/decoding system at the client. For example, after acquiring the training request for the audio encoding/decoding system, the terminal device 100 invokes the training plug-in for the audio encoding/decoding system to implement the training method for the audio encoding/decoding system: to be specific, first a first audio encoding/decoding system is acquired, where the first audio encoding/decoding system includes a first encoding network and a first decoding network; a to-be-trained second encoding network is generated corresponding to the first encoding network in response to a configuration request for the first encoding network; a first audio sample is encoded based on the to-be-trained second encoding network to obtain an audio bitstream sample of the first audio sample, and the audio bitstream sample is decoded based on the first decoding network to obtain a reconstructed audio sample of the first audio sample; and parameters of the to-be-trained second encoding network are updated based on the reconstructed audio sample to obtain a trained second encoding network. When the second encoding network is trained, parameters of the first decoding network remain unchanged, so that a training process for the first decoding network is omitted. Compared with the related art in which the first decoding network and the to-be-trained second encoding network are trained at the same time, a training period for the audio encoding/decoding system can be shortened, thereby reducing the upgrade cost of the encoding network in the audio encoding/decoding system, to meet actual application requirements of users.

In some embodiments, after acquiring the training request for the audio encoding/decoding system, the terminal device 100 invokes a training interface of the server 200 (which may be provided in a form of cloud service, i.e., as a training service for the audio encoding/decoding system) for the audio encoding/decoding system, the server 200 invokes the training plug-in for the audio encoding/decoding system to implement the training method for the audio encoding/decoding system: first a first audio encoding/decoding system is acquired, where the first audio encoding/decoding system includes a first encoding network and a first decoding network; a to-be-trained second encoding network corresponding to the first encoding network is generated in response to a configuration request for the first encoding network; a first audio sample is encoded based on a to-be-trained second encoding network to obtain an audio bitstream sample of the first audio sample, and the audio bitstream sample is decoded based on the first decoding network to obtain a reconstructed audio sample of the first audio sample; and parameters of the to-be-trained second encoding network are updated based on the reconstructed audio sample to obtain a trained second encoding network. When the second encoding network is trained, parameters of the first decoding network remain unchanged, so that a training process for the first decoding network is omitted. Compared with the related art in which the first decoding network and the to-be-trained second encoding network are trained at the same time, a training period for the audio encoding/decoding system can be shortened, thereby reducing the upgrade cost of the encoding network in the audio encoding/decoding system, to meet actual application requirements of users.

In conclusion, after the second encoding network is trained in the foregoing manner, the trained second encoding network and the first decoding network may be deployed for application, namely, the trained second encoding network and the first decoding network are separately integrated into one terminal device, to implement the audio encoding method and the audio decoding method, respectively.

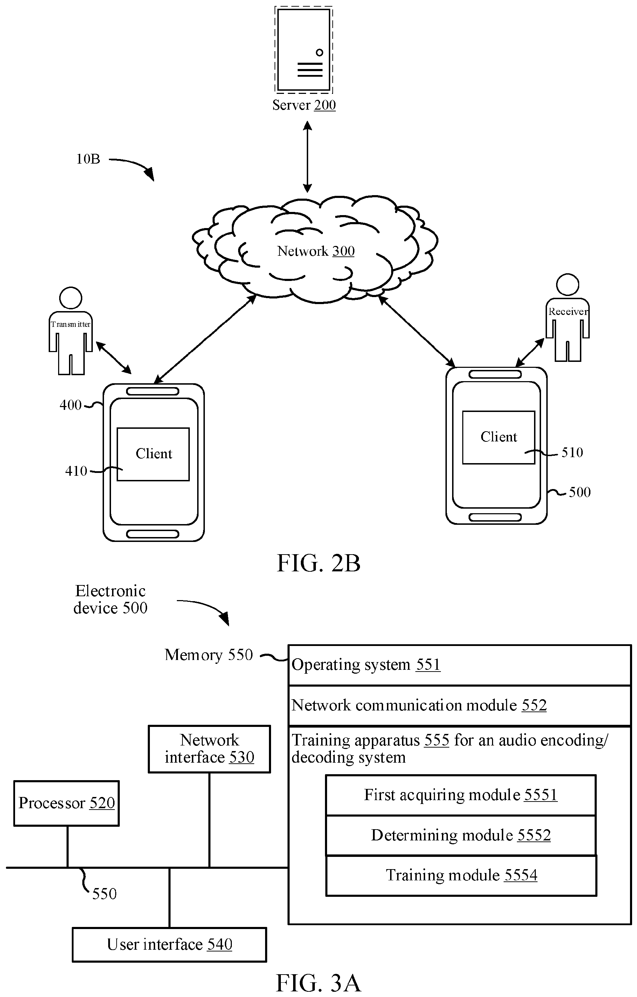

For example, FIG. 2B is a schematic diagram of an architecture of an audio encoding/decoding system 10B (i.e., a deployed audio encoding/decoding system including a second encoding network and a first decoding network) according to an embodiment of this application. The audio encoding/decoding system 10B includes a server 200, a network 300, a terminal device 400 (i.e., an encoder side), and a terminal device 500 (i.e., a decoder side). The network 300 may be a local area network, a wide area network, or a combination of the two.

In some embodiments, a client 410 runs on the terminal device 400, and the client 410 may be various types of clients, such as an instant messaging client, a network conference client, a live-streaming client, or a browser. In response to an audio collection instruction triggered by a transmitter (such as an initiator of a network conference, an anchor, or an initiator of a voice call), the client 410 invokes a microphone built in the terminal device 400 to collect an audio signal, and performs audio encoding on the collected audio signal to obtain an audio bitstream.

For example, the client 410 invokes the audio encoding method provided in this embodiment of this application to encode the acquired audio signal, namely, invoking the trained second encoding network to encode the audio signal to obtain a second encoding feature of the audio signal; and perform signal encoding on the second encoding feature of the audio signal to obtain a second audio bitstream of the audio signal.

The client 410 may transmit an audio bitstream package to the server 200 by using the network 300, so that the server 200 transmits the audio bitstream package to the terminal device 500 associated with a receiver (such as an attendance object of the network conference, audiences, or a receiver of the voice call).

After receiving the audio bitstream package transmitted by the server 200, the client 510 (such as the instant messaging client, a network conference client, a live-streaming client, or a browser) running on the terminal device 500 may perform audio decoding on the audio bitstream package to obtain a reconstructed audio signal, thereby implementing audio communication.

For example, the client 510 invokes the audio decoding method provided in this embodiment of this application to decode the received audio bitstream package, namely, performing signal decoding on the audio bitstream to obtain an encoding feature estimation value corresponding to the audio bitstream; and invokes the first decoding network to decode the encoding feature estimation value, to obtain a reconstructed audio signal corresponding to the audio bitstream.

The server 200 shown in FIG. 2A and the server 200 shown in FIG. 2B may be a same server, or may be different servers. The terminal device 100 shown in FIG. 2A and the terminal device 400 or the terminal device 500 shown in FIG. 2B may be a same terminal device, or may be different terminal devices.

In some embodiments, the terminal or the server may implement the training method for the audio encoding/decoding system, the audio encoding method, or the audio decoding method provided in this embodiment of this application by running various computer-executable instructions or a computer program. For example, the computer-executable instructions may be a microprogram-level command, machine instructions, or software instructions. The computer program may be a native program or a software module in an operating system; may be a native application (APP), namely, a program that needs to be installed in the operating system to run such as the live-streaming applications or instant messaging applications; or may be a mini program that is embedded in any APP, namely, a program that only needs to be downloaded into a browser environment to run. To sum up, the foregoing computer-executable instructions may be instructions in any form, and the foregoing computer program may be an application, a module, or a plug-in in any form.

FIG. 3A is a schematic structural diagram of an electronic device 500 according to an embodiment of this application. The electronic device 500 that is implemented as the server is taken as an example for description. The electronic device 500 shown in FIG. 3A includes at least one processor 520, a memory 550, at least one network interface 530, and a user interface 540. Components in the electronic device 500 are coupled together by using a bus system 550. The bus system 550 is configured to implement connection and communication among these components. In addition to a data bus, the bus system 550 further includes a power bus, a control bus, and a state signal bus. However, for clear description, various types of buses in FIG. 3A are marked as the bus system 550.

The processor 520 may be an integrated circuit chip with a signal processing capacity such as a general processor, a digital signal processor (DSP), another programmable logic device, discrete gate or transistor logic device, or discrete hardware assembly, or the like. The general processor may be a microprocessor or any conventional processor, and the like.

The memory 550 may be removable, irremovable or a combination thereof. For example, the hardware device includes a solid memory, a hard disk drive, an optical disk drive, and the like. In an embodiment, the memory 550 includes one or more storage devices that are physically away from the processor 520.

The memory 550 includes a volatile memory or a non-volatile memory, or may include both the volatile memory and the non-volatile memory. The non-volatile memory may be a read only memory (ROM), and the volatile memory may be a random access memory (RAM). The memory 550 described in this embodiment of this application aims at including any other suitable type of memories.

In some embodiments, the memory 550 can store data to support various operations. An example of these data includes a program, a module, and a data structure or a subset or a superset thereof, which may be described below by way of example.

An operating system 551 includes system programs for processing various basic system services and executing hardware-related tasks, such as a frame layer, a core library layer, and a drive layer, and is configured to implement various basic services and process hardware-based tasks.

A network communication module 552 is configured to connect to other computer devices via one or more (wired or wireless) network interfaces 530. For example, the network interface 530 includes Bluetooth, wireless fidelity (Wi-Fi), universal serial bus (USB), and the like.

In some embodiments, a training apparatus for an audio encoding/decoding system provided in this embodiment of this application may be implemented by software. FIG. 3A shows a training apparatus 555 for an audio encoding/decoding system stored in a memory 550, which may be software in a form of a program and a plug-in, and includes the following software modules: a first acquiring module 5551, a determining module 5552, and a training module 5553, where the first acquiring module 5551, the determining module 5552, and the training module 5553 are configured to implement a training function for the audio encoding/decoding system. These modules are logical and may be combined in different manners or further split based on to-be-implemented functions.

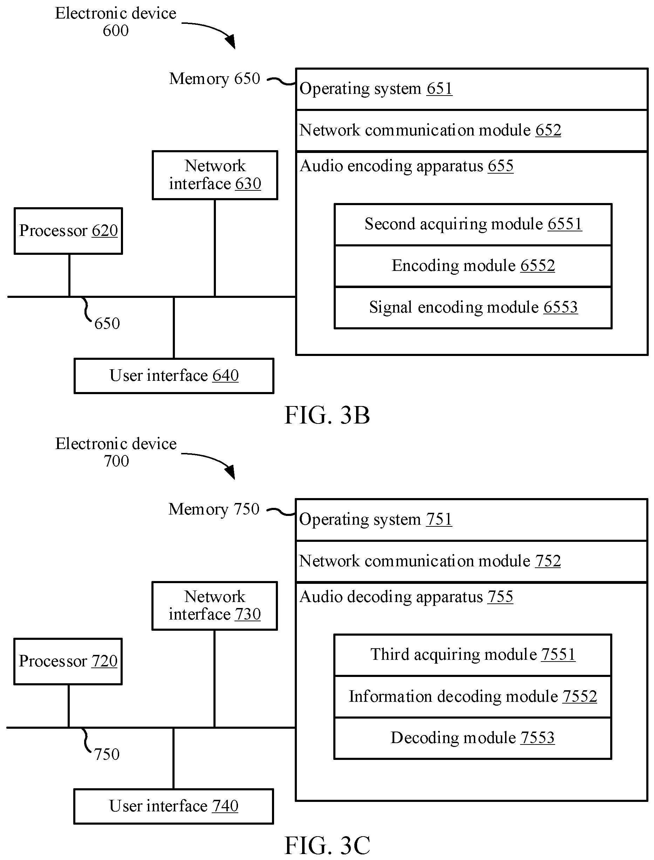

FIG. 3B is a schematic structural diagram of an electronic device 600 according to an embodiment of this application. The electronic device 600 that is implemented as a terminal device is taken as an example for description. The electronic device 600 shown in FIG. 3B includes at least one processor 620, a memory 650, at least one network interface 630, and a user interface 640. Components in the electronic device 600 are coupled together by using a bus system 650. The memory 650 includes an operating system 651 and a network communication module 652. A function of the structure in FIG. 3B is similar to a function of the structure in FIG. 3A. An audio encoding apparatus provided in this embodiment of this application may be implemented by software. FIG. 3B shows an audio encoding apparatus 655 stored in the memory 650, which may be software in a form of a program, a plug-in, or the like, and includes the following software modules: a second acquiring module 6551, an encoding module 6552, and a signal encoding module 6553, where the second acquiring module 6551, the encoding module 6552, and the signal encoding module 6553 are configured to implement an audio encoding function. These modules are logical and may be combined in different manners or further split based on to-be-implemented functions.

FIG. 3C is a schematic structural diagram of an electronic device 700 according to an embodiment of this application. The electronic device 700 that is implemented as a terminal device is taken as an example for description. The electronic device 700 shown in FIG. 3C includes at least one processor 720, a memory 750, at least one network interface 730, and a user interface 740. Components in the electronic device 700 are coupled together by using a bus system 750. The memory 750 includes an operating system 751 and a network communication module 752. A function of the structure in FIG. 3C is similar to the function of the structure in FIG. 3A. An audio decoding apparatus provided in this embodiment of this application may be implemented by software. FIG. 3B shows an audio decoding apparatus 755 stored in the memory 750, which may be software in a form of a program, a plug-in, or the like, and includes the following software modules: a third acquiring module 7551, a signal decoding module 7552, and a decoding module 7553, where the third acquiring module 7551, the signal decoding module 7552, and the decoding module 7553 are configured to implement an audio decoding function. These modules are logical and may be combined in different manners or further split based on to-be-implemented functions.

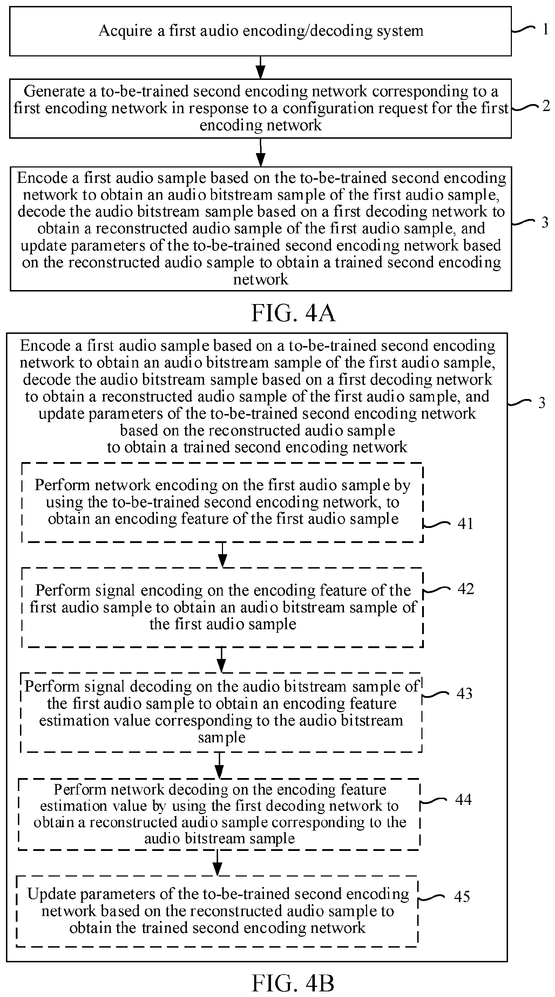

As described above, the training method for the audio encoding/decoding system provided in this embodiment of this application may be implemented by various types of electronic devices. FIG. 4A is a schematic flowchart of a training method for an audio encoding/decoding system according to an embodiment of this application. The method is described with reference to operation 1 to operation 4 shown in FIG. 4A.

Operation 1: Acquire a first audio encoding/decoding system, where the first audio encoding/decoding system includes a first encoding network and a first decoding network.

The first encoding network and the first decoding network are trained by using a second audio sample. The first encoding network and the first decoding network in the first audio encoding/decoding system match each other, namely, the first decoding network can correctly decode an audio bitstream encoded by the first encoding network. The first encoding network and the first decoding network are trained neural networks, and may be applied to an online service. For example, the first audio encoding/decoding system is already applied online, namely, the first encoding network is an encoding network for online applications, and may encode a received audio signal to obtain an audio bitstream; and the first decoding network is a decoding network for online applications, and may decode a received audio bitstream to obtain a reconstructed audio signal, thereby recovering an audio signal.

Operation 2: Generate a to-be-trained second encoding network corresponding to the first encoding network in response to a configuration request for the first encoding network.

The configuration request for the first encoding network is configured for indicating modification of configuration data of the first encoding network, to generate the to-be-trained second encoding network corresponding to the first encoding network, namely, the to-be-trained second encoding network is obtained by updating the first encoding network.

When the first encoding network in the first audio encoding/decoding system needs to be updated, the configuration data of the first encoding network is modified, the configuration request for the first encoding network is automatically generated, and the to-be-trained second encoding network corresponding to the first encoding network is determined in response to the configuration request for the first encoding network.

In some embodiments, the configuration request includes a homogeneous network configuration request for the first encoding network. The homogeneous network configuration request indicates that a network structure of the to-be-trained second encoding network obtained by updating the first encoding network is the same as a network structure of the first encoding network, to be specific, the to-be-trained second encoding network is a homogeneous network of the first encoding network constructed based on the homogeneous network configuration request. The homogeneous network configuration request is configured for indicating modification of first configuration data including at least one of: a second audio sample for training the first audio encoding/decoding system, and a training policy for training the first audio encoding/decoding system. The training policy is a strategy for training a neural network (such as the first encoding network or the first decoding network), and cannot change a structure of the neural network, such as an unsupervised learning strategy, a supervised learning strategy, and a training process strategy (such as the number of iterations, a training batch, and a learning rate). By properly selecting and combining these strategies, a training effect for the neural network can be effectively improved, so that the neural network exhibits better performance and generalization capability during actual application.

The supervised learning strategy utilizes labeled data for training and adjusts parameters of the neural network by comparing an output of the neural network with true labels; and the unsupervised learning strategy does not employ labeled data for training, and adjusts the parameters of the neural network by discovering a mode and structure in the data. In the training process strategy, the number of iterations represents a count of updates performed by the neural network over the entire training dataset. Appropriately selecting the number of iterations can effectively enhance the training effect for the neural network, and an excessively large number of iterations may lead to over-fitting, while an excessively small number of iterations may result in under-fitting. In the training process strategy, a batch size refers to the number of samples used in each iteration. Appropriately selecting the batch size can effectively improve the training effect for the neural network. A small batch size can reduce memory demand, enhance computation efficiency, and contribute to stable gradient updates; however, the small batch size may lead to training instability. Conversely, a large batch size may decrease the training speed. In the training process strategy, the learning rate represents a hyper-parameter that controls an updating step size of model parameters. Setting an appropriate learning rate facilitates rapid convergence, and gradually reducing the learning rate during the training process enhances training stability.

The first encoding network and the first decoding network are trained by using a second audio sample. When the homogeneous network configuration request is configured for instructing to replace the second audio sample, a first audio sample is the second audio sample replaced based on the homogeneous network configuration request, namely, the first audio sample is different from the second audio sample. For example, if the first audio sample is a speech sample and the second audio sample is a song sample, the first encoding network trained by using the speech sample is configured to encode a speech signal, which is applicable to a speech scenario; and the second encoding network trained by using the song sample is configured to encode a song signal, which is applicable to a singing scenario.

When the homogeneous network configuration request is configured for indicating modification of the training policy for training the first audio encoding/decoding system, a modified training policy is configured for training the to-be-trained second encoding network based on the first audio sample, to obtain the trained second encoding network, namely, the second encoding network is trained by using the first audio sample and the modified training policy, to obtain the trained second encoding network. The training policy for training the second encoding network is obtained by modifying the training policy for training the first encoding network, to be specific, the training policy for training the second encoding network is different from the training policy for training the first encoding network. For example, the training policy for training the first encoding network is an unsupervised learning strategy, and the training policy for training the second encoding network is a supervised learning strategy.

In some embodiments, the configuration request includes a heterogeneous network configuration request for the first encoding network, and the heterogeneous network configuration request is configured for indicating modification of second configuration data including at least one of: a network structure of the first encoding network and a number of parameters of the first encoding network; and operation 2 may be implemented in the following manner: modifying the second configuration data of the first encoding network in response to the heterogeneous network configuration request, to obtain the to-be-trained second encoding network. The to-be-trained second encoding network is a heterogeneous network of the first encoding network.

For example, when the heterogeneous network configuration request is configured for indicating modification of the network structure of the first encoding network, the network structure of the first encoding network is modified in response to the heterogeneous network configuration request, to obtain the to-be-trained second encoding network. The network structure of the to-be-trained second encoding network is different from the network structure of the first encoding network. The network structure of the to-be-trained second encoding network may be more complex than the network structure of the first encoding network, and the network structure of the to-be-trained second encoding network may alternatively be simpler than the network structure of the first encoding network.

For example, when the heterogeneous network configuration request is configured for indicating modification of the number of parameters of the first encoding network, the number of parameters of the first encoding network is modified in response to the heterogeneous network configuration request, to obtain the to-be-trained second encoding network. The number of parameters of the to-be-trained second encoding network is different from the number of parameters of the first encoding network, and the number of parameters of the to-be-trained second encoding network may be greater than the number of parameters of the first encoding network. For example, a variable dimensionality outputted by a convolution layer in the to-be-trained second encoding network is greater than a variable dimensionality outputted by a convolution layer corresponding to the same layer in the second encoding network; and the number of parameters of the to-be-trained second encoding network may be less than the number of parameters of the first encoding network. For example, a variable dimensionality outputted by the convolution layer in the to-be-trained second encoding network is less than a variable dimensionality outputted by the convolution layer corresponding to the same layer in the second encoding network.

The configuration request in this embodiment of this application is not limited to the foregoing heterogeneous network configuration request or the foregoing homogeneous network configuration request, and the configuration request may include the foregoing heterogeneous network configuration request and the foregoing homogeneous network configuration request.

In some embodiments, a second audio encoding/decoding system, i.e., a novel audio encoding/decoding system, is constructed based on the to-be-trained second encoding network and the first decoding network.

Since the first encoding network needs to be updated, the to-be-trained second encoding network corresponding to the first encoding network is determined based on the configuration request for the first encoding network, and the first audio encoding/decoding system is reserved. The first audio encoding/decoding system may further be deployed for applications. The novel audio encoding/decoding system, i.e., the second audio encoding/decoding system is constructed based on the to-be-trained second encoding network and the first decoding network, to subsequently allow the novel audio encoding/decoding system to be deployed for applications. Once the second audio encoding/decoding system is deployed for applications, the first audio encoding/decoding system may be decommissioned, namely, a latest audio encoding/decoding system is employed. After the second audio encoding/decoding system is deployed for applications, the first audio encoding/decoding system may alternatively be reserved. To be specific, the two audio encoding/decoding systems may be deployed for applications. The two audio encoding/decoding systems may be used in different scenarios. For example, if the first audio encoding/decoding system online is configured to transmit a speech signal, the first audio encoding/decoding system is applicable to a speech scenario; and if the second audio encoding/decoding system online is configured to transmit a song signal, the second audio encoding/decoding system is applicable to a singing scenario.

Operation 3: Encode the first audio sample using the to-be-trained second encoding network to obtain an audio bitstream sample of the first audio sample, decode the audio bitstream sample using the first decoding network to obtain a reconstructed audio sample of the first audio sample, and update parameters of the to-be-trained second encoding network based on the reconstructed audio sample to obtain a trained second encoding network.

FIG. 4B is a schematic flowchart of a training method for an audio encoding/decoding system according to an embodiment of this application. Operation 3 shown in FIG. 4B may be implemented through the following operation 41 to operation 45 shown in FIG. 4B:

Operation 41: Perform network encoding on the first audio sample by using the to-be-trained second encoding network, to obtain an encoding feature of the first audio sample.

As shown in operation 2, the to-be-trained second encoding network may be a homogeneous network of the first encoding network. Therefore, the to-be-trained second encoding network is trained by using a training sample or a training policy different from that of the first encoding network, so that the trained second encoding network and the first encoding network are applicable to different scenarios. The to-be-trained second encoding network may alternatively be a heterogeneous network of the first encoding network, and a network structure of the to-be-trained second encoding network may be more complex than a network structure of the first encoding network. To be specific, compared with the first encoding network, complexity of the second encoding network is increased, and an encoding effect can be improved by increasing computational capacity of the encoding network. The network structure of the to-be-trained second encoding network may alternatively be simpler than the network structure of the first encoding network. To be specific, the structure of the first encoding network is tailor-made to obtain a simpler second encoding network, to reduce complexity of the encoding network and adapt to lightweight applications.

The following employs an example in which the complexity of the second encoding network relative to the first encoding network (for example, the to-be-trained second encoding network includes the network structure of the first encoding network and a one-dimensional convolution layer) is increased.

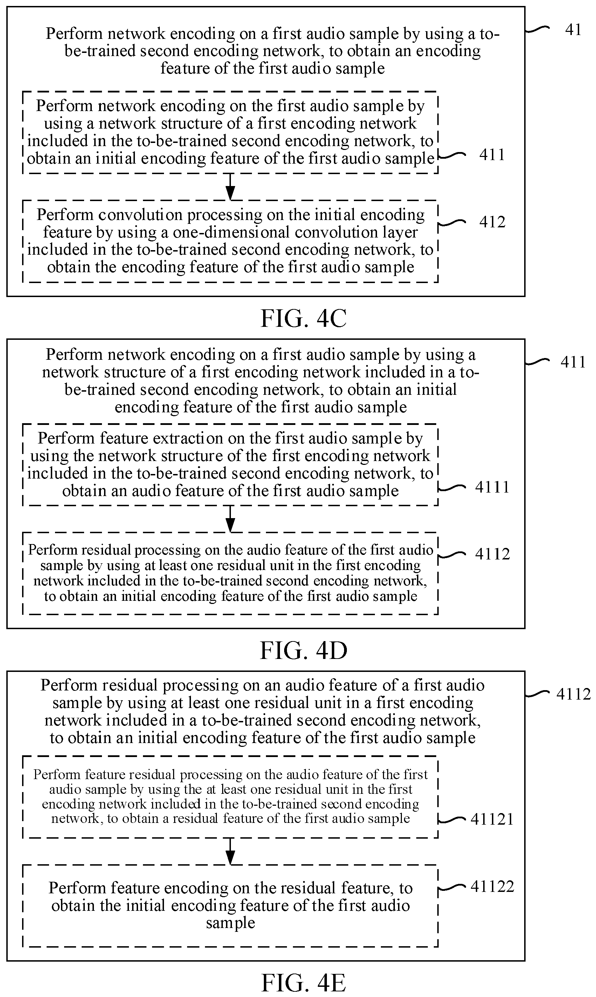

FIG. 4C is a schematic flowchart of a training method for an audio encoding/decoding system according to an embodiment of this application. Operation 41 in FIG. 4C may be implemented through the following operation 411 to operation 412:

Operation 411: Perform network encoding on a first audio sample by using a network structure of a first encoding network included in the to-be-trained second encoding network, to obtain an initial encoding feature of the first audio sample.

FIG. 4D is a schematic flowchart of a training method for an audio encoding/decoding system according to an embodiment of this application. Operation 411 shown in FIG. 4D may be implemented through the following operation 4111 to operation 4112.

Operation 4111: Perform feature extraction on a first audio sample by using a network structure of the first encoding network included in the to-be-trained second encoding network, to obtain an audio feature of the first audio sample.

In some embodiments, operation 4111 may be implemented in the following manner: performing causal convolution processing on the first audio sample by using the network structure of the first encoding network included in the to-be-trained second encoding network to obtain a causal convolution feature; and performing pooling processing on the causal convolution feature, to obtain an audio feature of the first audio sample.

In the field of audio encoding and decoding, operations such as causal convolution and pooling in the neural network (NN) play a crucial role in processing the first audio sample (i.e., a sample of an audio signal) and extracting a feature from the audio signal. During audio encoding and decoding, a causal convolution operation may be configured for extracting a local feature from the audio signal. By employing a convolution kernel (a type of learnable filter), convolution operations may be performed along a temporal dimension of the audio signal to capture patterns and resonances in the signal. The causal convolution may extract temporal and frequency features from the audio signal for tasks such as noise reduction, feature extraction, and signal separation. The pooling operation is configured for reducing temporal dimensions of the audio signal, thereby reducing data complexity and a computational amount. The pooling operation may sample a local region of an input signal and summarizes the information within the region, such as a maximum or average value, thereby generating a more compact feature representation. In the audio signal, the pooling operation may help to improve robustness and a generalization capability of a network, and reduce a risk of over-fitting. In the field of audio encoding and decoding, operations such as convolution and pooling may implement tasks such as feature extraction, encoding, and decoding of the audio signal by constructing an appropriate neural network structure. These operations contribute to improving audio signal processing efficiency and quality, and extending an application range of audio encoding/decoding technologies to fields such as audio processing, speech recognition, and music generation.

Operation 4112: Perform residual processing on the audio feature of the first audio sample by using at least one residual unit in the first encoding network included in the to-be-trained second encoding network, to obtain an initial encoding feature of the first audio sample.

In a neural network model, the residual unit refers to a special structure configured to construct a residual network (ResNets). The residual unit aims to solve problems of gradient vanishing and gradient explosion during the training of deep neural networks, and to assist the network in better learning features. A skip connection is introduced into the residual unit, namely, an input is directly added to an output, rather than being simply transmitted layer by layer. This skip connection enables the network to learn a residual function, namely, learn a difference between the input and the output, instead of directly learning a mapping relationship. This design allows the network to be optimized more easily, and contributes to reducing the gradient vanishing problem.

By performing residual processing of the encoder side on the audio feature, based on the characteristics of residual processing, comprehensive learning for the audio feature is ensured, shallow-layer feature information of the audio feature can be better utilized, thereby preventing omission of the shallow-layer feature information of the audio feature.

Based on the characteristics of the residual unit, the residual processing in operation 4112 is configured for computing a residual of the audio feature on the encoder side and determining the residual of the audio feature as the initial encoding feature for subsequent signal encoding. For example, the residual of the audio feature is obtained by adding the output of the audio feature to the output of the residual unit. To be specific, the audio feature serves as the input to the residual unit; the audio feature is processed by the residual unit to obtain the output of the residual unit, and based on the characteristics of the skip connection of the residual unit, the input of the residual unit is added to the output of the residual unit, thereby yielding the residual of the audio features.

FIG. 4E is a schematic flowchart of a training method for an audio encoding/decoding system according to an embodiment of this application. Operation 4112 in FIG. 4E may be implemented through the following operation 41121 to operation 41122.

Operation 41121: Perform feature residual processing on the audio feature of the first audio sample by using at least one residual unit in the first encoding network included in the to-be-trained second encoding network, to obtain a residual feature of the first audio sample.

The feature residual processing in operation 41121 is configured for computing a residual of the audio feature, and determining the residual of the audio feature as the residual feature of the first audio sample, to facilitate subsequent feature encoding.

In some embodiments, when the at least one residual unit is one residual unit, operation 41121 may be implemented in the following manner: performing one-time residual processing on the audio feature of the first audio sample by using one residual unit in the first encoding network included in the to-be-trained second encoding network, to obtain the residual feature of the first audio sample. One-time residual processing of one residual unit is configured for computing one residual corresponding to the first audio sample on the encoder side.

In some embodiments, when the at least one residual unit is a plurality of cascaded residual units, operation 41121 may be implemented in the following manner: performing residual processing on the audio feature of the first audio sample by using the first residual unit among the plurality of cascaded residual units, where single residual processing performed by the first residual unit is configured for computing one residual of the first audio sample, and determining the residual of the first audio sample as a residual result of the first residual unit; outputting the residual result outputted by the first residual unit to a subsequent cascaded residual unit, and continuously performing the residual processing and outputting the residual result by using subsequent cascaded residual units, where one-time residual processing performed by the subsequent cascaded residual units is configured for computing a residual of the residual result inputted to the subsequent cascaded residual units; and taking the residual result outputted by a final residual unit as the residual feature of the first audio sample.

In some embodiments, a processing procedure of the residual unit is as follows: a k^{th} residual unit among the plurality of cascaded residual units is employed to perform the following processing: performing convolution processing on an input of the k^{th} residual unit to obtain a convolution result of the k^{th} residual unit; adding the convolution result of the k^{th} residual unit to the input of the k^{th} residual unit to obtain a residual result outputted by the k^{th} residual unit, where k is a positive integer that increases sequentially, 1 ≤ k ≤ J, and J is the number of residual units; when k is 1, the input of the k^{th} residual unit is an audio feature of the first audio sample, and when k is not 1, the input of the k^{th} residual unit is a residual result outputted by a (k-1)^{th} residual unit. To be specific, the performing single residual processing on the audio feature of the first audio sample by using the first residual unit among the plurality of cascaded residual units may be implemented in the following manner: performing the following processing by using the first residual unit among the plurality of cascaded residual units: performing convolution processing on the audio feature of the first audio sample, to obtain a convolution result of the first residual unit; and adding the convolution result of the first residual unit to the audio feature of the first audio sample, to obtain a residual result outputted by the first residual unit. The performing the single residual processing and outputting the residual result by using the subsequent cascaded residual unit may be implemented in the following manner: performing the following processing by using a j^{th} residual unit among the plurality of cascaded residual units: performing convolution processing on a residual result outputted by a (j-1)^{th} residual unit, to obtain a convolution result of the j^{th} residual unit; adding the convolution result of the j^{th} residual unit to the residual result outputted by the (j-1)^{th} residual unit, to obtain a residual result outputted by the j^{th} residual unit; and outputting the residual result outputted by the j^{th} residual unit to a (j+1)^{th} residual unit, where j is a positive integer that increases sequentially, 1 < j < J, and J is the number of residual units.

Continuing the foregoing embodiment, each residual unit includes a dilated convolution operator; performing the following processing by using the k^{th} residual unit among the plurality of cascaded residual units: performing convolution processing on an input of the k^{th} residual unit to obtain the convolution result of the k^{th} residual unit, which may be implemented in the following manner: performing the following processing by using the k^{th} residual unit among the plurality of cascaded residual units: performing dilated convolution processing on the input of the k^{th} residual unit, to obtain a convolution result of the k^{th} residual unit. To be specific, the dilated convolution processing is performed on the audio feature of the first audio sample by using the dilated convolution operator included in the first residual unit, to obtain a dilated convolution result of the first residual unit. The j^{th} residual unit among the plurality of cascaded residual units is employed to perform the following processing: performing dilated convolution processing on a residual result outputted by the (j-1)^{th} residual unit by using a dilated convolution operator included in the j^{th} residual unit, to obtain a dilated convolution result of the j^{th} residual unit, where j is a positive integer that increases sequentially, 1 < j ≤ J, and J is the number of the residual units. Each residual unit includes a dilated convolution operator with a specified dilation rate, and employing the dilated convolution operator with progressive dilation rates is equivalent to extracting features of the input at different resolutions by using varying receptive fields, so that more comprehensive analysis may be performed on the data. After convolution processing performed by using the dilated convolution operator with the dilation rate, each residual unit is added with a shallow-layer feature (i.e., the input of each residual unit) transmitted via skip connection, thereby directly using shallow-layer feature information, and enabling the network to fully use the shallow-layer feature information in a learning process.

Continuing the foregoing embodiment, each residual unit not only includes the dilated convolution operator, but also includes at least one causal convolution operator; after convolution processing is performed on the input of the k^{th} residual unit to obtain the convolution result of the k^{th} residual unit, causal convolution processing is performed on the obtained dilated convolution result by using at least one causal convolution operator included in the k^{th} residual unit, and the obtained causal convolution result is taken as the convolution result of the k^{th} residual unit. To be specific, causal convolution processing is performed on the dilated convolution result of the first residual unit by using at least one causal convolution operator included in the first residual unit, and the obtained causal convolution result is taken as the convolution result outputted by the first residual unit. After dilated convolution processing is performed on the residual result outputted by the (j-1)^{th} residual unit by using the dilated convolution operator included in the j^{th} residual unit to obtain a dilated convolution result of the j^{th} residual unit, causal convolution processing is performed on the dilated convolution result of the j^{th} residual unit by using at least one causal convolution operator included in the j^{th} residual unit, and a causal convolution result of the j^{th} residual unit is taken as the convolution result of the j^{th} residual unit. Each residual unit further includes at least one causal convolution operator, and local information of a feature inputted to the causal convolution operator continues to be extracted by using the causal convolution operator.

In neural network models, causal convolution refers to a special type employed when processing time-series data (where an audio signal is a type of time-series data), ensuring that the output of the neural network depends solely on current and preceding time steps, thereby preserving temporal causality. In practical applications, causal convolution ensures that the convolution kernel does not extend into a region beyond the current time step by adjusting a size of the convolution kernel. In this way, a long-term dependency relationship in a time series can be effectively captured, and a problem of gradient vanishing or explosion caused by confusion of future information can be avoided. Causal convolution is particularly important in fields such as natural language processing, speech recognition, and temporal order prediction. Since the causal convolution follows a temporal order of the data, confusion of past information is avoided, and long time-series data can be processed and predicted effectively. In tasks such as speech recognition and time series forecasting, causal convolution exhibits excellent performance due to a characteristic of keeping the temporal order.

In some embodiments, when group convolution is applied to the dilated convolution operator included in the residual unit, the performing dilated convolution processing on the audio feature may be implemented in the following manner: grouping input channels of the audio feature of the first audio sample to obtain multiple groups, where each group includes first elements (i.e., first feature values) corresponding to at least two channels in the audio features of the first audio sample; and performing dilated convolution processing on the first elements in each group. When group convolution is applied to the causal convolution operators included in the residual unit, the performing causal convolution processing on the obtained dilated convolution result may be implemented in the following manner: grouping the input channels of the dilated convolution result into multiple groups, where each group includes second elements (i.e., second feature values) corresponding to at least two channels in the dilated convolution result; and performing causal convolution processing on the second elements in each group.

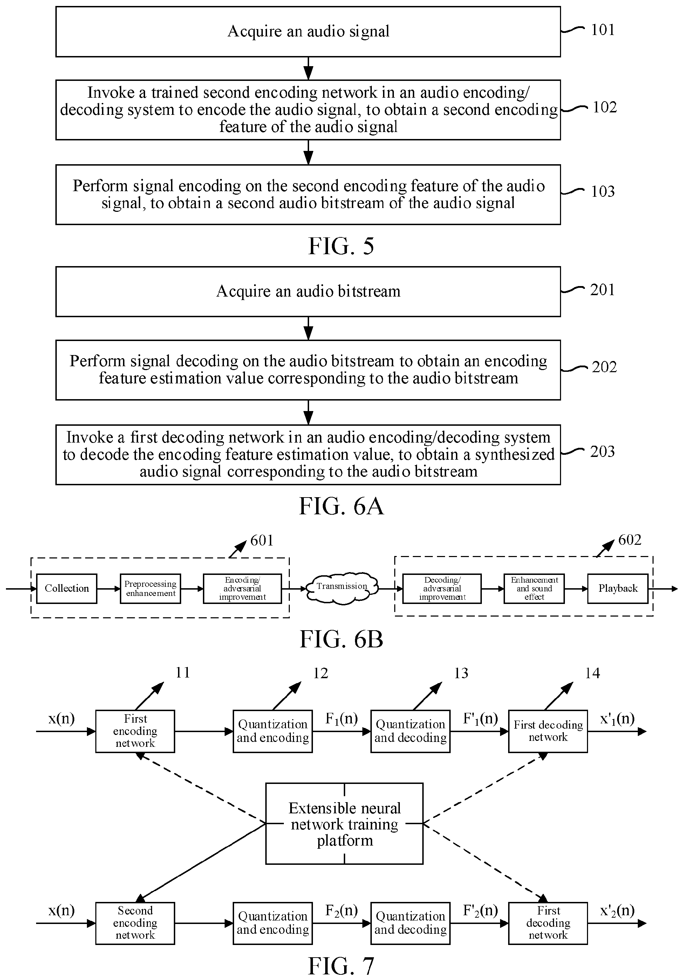

For example, group convolution may be applied to the convolution operator (including the dilated convolution operator and the causal convolution operator) of the residual unit, where group convolution divides the input channels into multiple groups for convolution operations, establishing an association only between the input channels and the output channels in each group. When the input channels are divided into multiple groups, the corresponding output channels may further be divided into multiple groups, namely, the number of groups of the input channels is identical to the number of groups of the output channels, so that after convolution is performed within each group, the association is established only between the input channels and output channels in the same group. It is assumed that the input channels of a feature inputted into a specific convolution operator are 4, and the output channels are 4. If the number of groups is 1, each input channel is associated with 4 output channels. If the number of groups is 2, the 4 input channels are first divided into two groups: 0-1 and 2-3. In the two groups, the input channels are associated with the output channels in the same group. For example, the input channels 0 to 1 in a first group are associated with output channels 0 to 1, and the input channels 2 to 3 in a second group are associated with output channels 2 to 3. As shown in FIG. 6A, when a group convolution solution is not employed, each input channel is associated with 4 output channels. As shown in FIG. 6B, when the group convolution solution is not employed, an 0^{th} output channel is only associated with the 0^{th} input channel and the first input channel and is not associated with the second input channel and the third input channel; and the second output channel is only associated with the second input channel and the third input channel and is not associated with the 0^{th} input channel and the first input channel. By comparison, it can be seen that introducing group convolution may prevent each input channel from being connected to all output channels, thereby reducing the number of connections and lowering complexity.

Operation 41122: Perform feature encoding on the residual feature, to obtain the initial encoding feature of the first audio sample.

In some embodiments, operation 41122 may be implemented in the following manner: performing convolution processing on a residual feature, to obtain a convolution feature, where the number of channels of the convolution feature is greater than the number of channels of the residual feature; and performing pooling processing on the convolution feature, to obtain the initial encoding feature of the first audio sample.

In some embodiments, the first encoding network included in the to-be-trained second encoding network includes a plurality of cascaded encoding blocks, and each encoding block includes at least one residual unit and a feature encoding block; and operation 4112 is implemented by using the plurality of cascaded encoding blocks, and operation 4112 may be implemented in the following manner: performing residual processing on the audio feature by using at least one residual unit in the plurality of cascaded encoding blocks, to obtain the residual feature of the first audio sample; and performing feature encoding performed on the residual feature by using the feature encoding block among the plurality of cascaded encoding blocks, to obtain the initial encoding feature of the first audio sample.

In some embodiments, the performing residual processing on the audio feature by using at least one residual unit in the plurality of cascaded encoding blocks to obtain the residual feature of the audio signal may be implemented in the following manner: performing residual processing on the audio feature of the first audio sample by using at least one residual unit in a first encoding block among the plurality of cascaded encoding blocks, and outputting a residual result outputted by the at least one residual unit in the first encoding block to the feature encoding block in the first encoding block; performing residual processing on an encoded result outputted by the feature encoding block in an (i-1)^{th} encoding block by using the at least one residual unit in an i^{th} encoding block among a plurality of cascaded encoding blocks, and outputting a residual result outputted by the at least one residual unit in the i^{th} encoding block to a feature encoding block in the i^{th} encoding block; and taking a residual result outputted by at least one residual unit in a last encoding block as the residual feature of the first audio sample, where i is a positive integer that increases sequentially, 1 < i ≤ I, and I is the number of encoding blocks. The performing feature encoding on the residual feature by using the feature encoding block in the plurality of cascaded encoding blocks, to obtain the initial encoding feature of the first audio sample may be implemented in the following manner: performing feature encoding on the residual feature of the first audio sample by using the feature encoding block in the last encoding block among the plurality of cascaded encoding blocks, to obtain the initial encoding feature of the first audio sample. The encoding feature is obtained by performing the following processing by using the last encoding block among the plurality of cascaded encoding blocks: performing convolution processing on the residual feature to obtain a convolution feature, where the number of channels of the convolution feature is greater than the number of channels of the residual feature; and performing pooling processing on the convolution feature, to obtain the initial encoding feature of the first audio sample.

Operation 412: Perform convolution processing on the initial encoding feature by using a one-dimensional convolution layer included in the to-be-trained second encoding network, to obtain the encoding feature of the first audio sample.

A main difference between the to-be-trained second encoding network and the first encoding network lies in that a one-dimensional convolution layer is cascaded at the end of the first encoding network. An input variable and an output variable of the one-dimensional convolution layer have identical dimensions. By increasing the number of layers of the encoding network, a feature extraction capability of the encoding network can be improved. Similarly, further increasing the number of layers of the encoding network includes further adding one or more residual units in the one-dimensional convolution layer.

Operation 42: Perform signal encoding on the encoding feature of the first audio sample, to obtain an audio bitstream sample of the first audio sample.

In some embodiments, operation 42 may be implemented in the following manner: quantization is performed on the encoding feature of the first audio sample, to obtain an index value of the encoding feature; and entropy encoding is performed on the index value of the encoding feature, to obtain the audio bitstream sample of the first audio sample.

Operation 3 of "encoding the first audio sample based on the to-be-trained second encoding network, to obtain an encoding result of the first audio sample" is implemented through the above operation 41 and operation 42.

Operation 43: Perform signal decoding on the audio bitstream sample of the first audio sample, to obtain an encoding feature estimation value corresponding to the audio bitstream sample.

In some embodiments, operation 44 may be implemented in the following manner: performing entropy decoding on the audio bitstream sample of the first audio sample, to obtain the index value corresponding to the audio bitstream sample; and performing inverse quantization on the index value corresponding to the audio bitstream sample, to obtain the encoding feature estimation value corresponding to the audio bitstream sample.

The inverse quantization is implemented by querying a quantization table. The quantization table is a mapping table generated by quantization in an encoding process. For example, for a received audio bitstream sample, entropy decoding is first performed, and an estimation value of a feature vector, i.e., the encoding feature estimation value corresponding to the audio bitstream sample, is obtained by querying the quantization table (i.e., inverse quantization, where the quantization table is a mapping table generated by quantization in the encoding process).

Operation 44: Perform network decoding on the encoding feature estimation value by using the first decoding network, to obtain a reconstructed audio sample corresponding to the audio bitstream sample.

The network decoding processing is a reverse process of the network encoding processing. Therefore, the values generated in the network decoding process are estimated values relative to the values in the network encoding process. For example, the encoding feature generated in the network decoding process is an estimated value relative to the encoding feature in the network encoding process, i.e., the encoding feature estimation value.

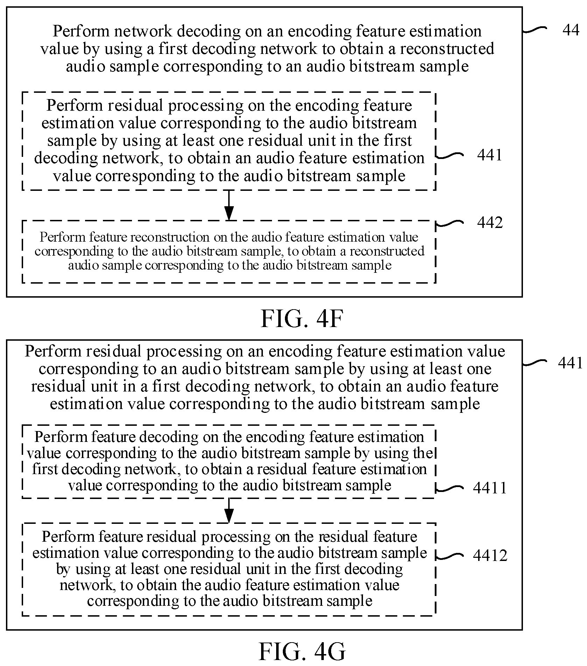

FIG. 4F is a schematic flowchart of a training method for an audio encoding/decoding system according to an embodiment of this application. Operation 44 shown in FIG. 4F may be implemented through the following operation 441 to operation 442.

Operation 441: Perform residual processing on the encoding feature estimation value corresponding to the audio bitstream sample by using the at least one residual unit in the first decoding network, to obtain the audio feature estimation value corresponding to the audio bitstream sample.

Based on the characteristics of the residual units, at least one residual unit is utilized to perform residual processing on the encoding feature estimation value corresponding to the audio bitstream sample, which is configured to compute the residual of the encoding feature estimation value on the decoder side. For example, the residual of the encoding feature estimation value is obtained by adding the encoding feature estimation value to the output of the residual unit on the decoder side, namely, the encoding feature estimation value is used as the input of the residual unit; and based on the characteristic of skip connection of the residual unit, the encoding feature estimation value is processed by the residual unit on the decoder side to obtain the output of the residual unit, and the input of the residual unit on the decoder side is added to the output of the residual unit to obtain the residual of the encoding feature estimation value.

FIG. 4G is a schematic flowchart of a training method for an audio encoding/decoding system according to an embodiment of this application. Operation 441 shown in FIG. 4G may be implemented through the following operation 4411 to operation 4412.

Operation 4411: Perform feature decoding on the encoding feature estimation value corresponding to the audio bitstream sample by using the first decoding network, to obtain a residual feature estimation value corresponding to the audio bitstream sample.

For example, feature decoding is an inverse process of feature encoding. Feature decoding is performed on the encoding feature estimation value, to obtain the residual feature estimation value (an estimated value) corresponding to the audio bitstream sample. In this embodiment of this application, the first decoding network may be invoked to perform feature decoding on the encoding feature estimation value corresponding to the audio bitstream sample, to obtain the residual feature estimation value corresponding to the audio bitstream sample.

In some embodiments, operation 4411 may be implemented in the following manner: performing convolution processing on the encoding feature estimation value corresponding to the audio bitstream sample, to obtain a convolution feature, where the number of channels of the convolution feature is less than the number of channels of the encoding feature estimation value corresponding to the audio bitstream sample; and performing up-sampling processing on the convolution feature to obtain the residual feature estimation value corresponding to the audio bitstream sample.

In the field of audio encoding and decoding, an up-sampling operation is configured for increasing a resolution of a feature map (i.e., a convolution feature), to reconstruct the audio signal more accurately. Up-sampling involves interpolation or other forms of up-sampling technologies to generate the feature map with higher accuracy, which facilitates better recovery of original details and characteristics of the audio signal in the decoding process. By employing neural network technologies such as convolution, pooling, and up-sampling in audio decoding, useful features can be effectively extracted, computational complexity can be reduced, and the original content of the audio signal can be more accurately reconstructed. These technologies have important significance for improving audio decoding performance and efficiency, and facilitate the development and application of the audio encoding and decoding technologies.

Certainly, prior to operation 4411, causal convolution may alternatively be performed on the encoding feature estimation value corresponding to the audio bitstream sample, to obtain the encoding feature estimation value obtained after causal convolution, and operation 4411 is performed based on the encoding feature estimation value obtained after causal convolution, namely, feature decoding is performed on the encoding feature estimation value obtained after causal convolution, to obtain the residual feature estimation value corresponding to the audio bitstream sample.

Operation 4412: Perform feature residual processing on the residual feature estimation value corresponding to the audio bitstream sample by using the at least one residual unit in the first decoding network, to obtain the audio feature estimation value corresponding to the audio bitstream sample.

By performing residual processing on the residual feature estimation value corresponding to the audio bitstream sample, comprehensive learning of the residual feature estimation value is ensured, shallow-layer feature information of the residual feature estimation value can further be better used, and the loss of the shallow-layer feature information is avoided.

In some embodiments, when the at least one residual unit is a plurality of cascaded residual units, operation 4412 may be implemented in the following manner: performing one-time residual processing on the residual feature estimation value by using one residual unit, to obtain the audio feature estimation value corresponding to the audio bitstream sample.

In some embodiments, when the at least one residual unit is a plurality of cascaded residual units, operation 4412 may be implemented in the following manner: performing one-time residual processing on the residual feature estimation value by using a first residual unit among the plurality of cascaded residual units; outputting a residual result outputted by the first residual unit to a subsequent cascaded residual units, and continuously performing residual processing by using the subsequent cascaded residual units and outputting the residual result; and taking a residual result outputted by the last residual unit as the audio feature estimation value corresponding to the audio bitstream sample.

In some embodiments, a processing procedure of the residual unit is as follows: a k^{th} residual unit among the plurality of cascaded residual units is employed to perform the following processing: performing convolution processing on an input of the k^{th} residual unit to obtain a convolution result of the k^{th} residual unit; adding the convolution result of the k^{th} residual unit to the input of the k^{th} residual unit to obtain a residual result outputted by the k^{th} residual unit, where k is a positive integer that increases sequentially, 1 ≤ k ≤ J, and J is the number of residual units; when k is 1, the input of the k^{th} residual unit is the residual feature estimation value, and when k is not 1, the input of the k^{th} residual unit is a residual result outputted by a (k-1)^{th} residual unit. To be specific, the performing residual processing on the residual feature estimation value may be implemented in the following manner: performing the following processing by using the first residual unit among the plurality of cascaded residual units: performing convolution processing on the residual feature estimation value, to obtain the convolution result of the first residual unit; and adding the convolution result of the first residual unit to the residual feature estimation value, to obtain the residual result outputted by the first residual unit. The performing single residual processing and outputting the residual result by using the subsequent cascaded residual unit may be implemented in the following manner: performing the following processing by using a j^{th} residual unit among the plurality of cascaded residual units: performing convolution processing on a residual result outputted by a (j-1)^{th} residual unit, to obtain a convolution result of the j^{th} residual unit; adding the convolution result of the j^{th} residual unit to the residual result outputted by the (j-1)^{th} residual unit, to obtain a residual result outputted by the j^{th} residual unit; and outputting the residual result outputted by the j^{th} residual unit to a (j+1)^{th} residual unit, where j is a positive integer that increases sequentially, 1 < j < J, and J is the number of residual units.

Continuing the foregoing embodiment, each residual unit includes a dilated convolution operator; performing the following processing by using the k^{th} residual unit among the plurality of cascaded residual units: performing convolution processing on an input of the k^{th} residual unit, to obtain a convolution result of the k^{th} residual unit, which may be implemented in the following manner: performing the following processing by using the k^{th} residual unit among the plurality of cascaded residual units: performing dilated convolution processing on the input of the k^{th} residual unit, to obtain the convolution result of the k^{th} residual unit. Namely, a dilated convolution operator included in the first residual unit is employed to perform dilated convolution processing on the residual feature, to obtain a dilated convolution result of the first residual unit. The j^{th} residual unit among the plurality of cascaded residual units is employed to perform the following processing: performing dilated convolution processing on a residual result outputted by the (j-1)^{th} residual unit by using a dilated convolution operator included in the j^{th} residual unit, to obtain a dilated convolution result of the j^{th} residual unit, where j is a positive integer that increases sequentially, 1 < j ≤ J, and J is the number of the residual units.

Continuing the foregoing embodiment, each residual unit not only includes the dilated convolution operator, but also includes at least one causal convolution operator; after convolution processing is performed on the input of the k^{th} residual unit to obtain the convolution result of the k^{th} residual unit, causal convolution processing is performed on the obtained dilated convolution result by using at least one causal convolution operator included in the k^{th} residual unit, and the obtained causal convolution result is taken as the convolution result of the k^{th} residual unit. To be specific, causal convolution processing is performed on the dilated convolution result of the first residual unit by using at least one causal convolution operator included in the first residual unit, and the obtained causal convolution result is taken as the convolution result outputted by the first residual unit. After dilated convolution processing is performed on the residual result outputted by the (j-1)^{th} residual unit by using the dilated convolution operator included in the j^{th} residual unit to obtain a dilated convolution result of the j^{th} residual unit, causal convolution processing is performed on the dilated convolution result of the j^{th} residual unit by using at least one causal convolution operator included in the j^{th} residual unit, and a causal convolution result of the j^{th} residual unit is taken as the convolution result of the j^{th} residual unit.

In some embodiments, when group convolution is applied to the dilated convolution operator included in the residual unit, performing dilated convolution processing on the audio feature may be implemented in the following manner: grouping input channels of the residual feature estimation value into multiple groups, where each group includes first elements (i.e., first feature values) corresponding to at least two channels in the residual feature estimation value; and performing dilated convolution processing on the first elements in each group. When group convolution is applied to the causal convolution operators included in the residual unit, the performing causal convolution processing on the obtained dilated convolution result may be implemented in the following manner: grouping the input channels of the dilated convolution result into multiple groups, where each group includes second elements (i.e., second feature values) corresponding to at least two channels in the dilated convolution result; and performing causal convolution processing on the second elements in each group.

In some embodiments, the first decoding network includes a plurality of cascaded decoding blocks, and each decoding block includes a feature decoding block and at least one residual unit; and operation 441 may be implemented in the following manner: performing feature decoding on the encoding feature estimation value corresponding to the audio bitstream sample by using the feature decoding block among the plurality of cascaded decoding blocks, to obtain the residual feature estimation value corresponding to the audio bitstream sample; and correspondingly, performing residual processing on the residual feature estimation value corresponding to the audio bitstream sample by using at least one residual unit in the plurality of cascaded decoding blocks, to obtain the audio feature estimation value corresponding to the audio bitstream sample.

In some embodiments, the performing feature decoding on the encoding feature estimation value corresponding to the audio bitstream sample by using the feature decoding block among a plurality of cascaded decoding blocks to obtain the residual feature estimation value corresponding to the audio bitstream sample may be implemented in the following manner: performing feature decoding on the encoding feature estimation value corresponding to the audio bitstream sample by using the feature decoding block in a first decoding block among the plurality of cascaded decoding blocks, and outputting a decoding result outputted by the feature decoding block in the first decoding block to at least one residual unit in the first decoding block; performing feature decoding on the residual result outputted by the at least one residual unit in a (i-1)^{th} decoding block by using a feature decoding block in an i^{th} decoding block among the plurality of cascaded decoding blocks, and outputting a decoding result outputted by the feature decoding block in the i^{th} decoding block to the at least one residual unit in the i^{th} decoding block; and taking a decoding result outputted by a feature decoding block in a last decoding block as the residual feature estimation value corresponding to the audio bitstream sample, where i is a positive integer that increases sequentially, 1 < i ≤ I, and I is the number of decoding blocks. The decoding result outputted by the feature decoding block in the first decoding block is obtained by performing the following processing by using the feature decoding block in the first decoding block among the plurality of cascaded decoding blocks: performing convolution processing on the encoding feature estimation value corresponding to the audio bitstream sample, to obtain a convolution feature, where the number of channels of the convolution feature is less than the number of channels of the encoding feature; and performing up-sampling processing on the convolution feature, to obtain the decoding result outputted by the feature decoding block in the first decoding block. The decoding result outputted by the feature decoding block in the i^{th} decoding block is obtained by performing the following processing by using the feature decoding block in the i^{th} decoding block: performing convolution processing on the residual result outputted by the at least one residual unit in the (i-1)^{th} decoding block, to obtain the convolution feature, where the number of channels of the convolution feature is less than the number of channels of the residual result outputted by the at least one residual unit; and performing up-sampling processing on the convolution feature, to obtain the decoding result outputted by the feature decoding block in the i^{th} decoding block.

In some embodiments, the performing residual processing on the residual feature estimation value corresponding to the audio bitstream sample by using the at least one residual unit in the plurality of cascaded decoding blocks, to obtain the audio feature estimation value corresponding to the audio bitstream sample may be implemented in the following manner: performing residual processing on the residual feature estimation value corresponding to the audio bitstream sample by using the at least one residual unit in the last decoding block among the plurality of cascaded decoding blocks, to obtain the audio feature estimation value corresponding to the audio bitstream sample.

Operation 442: Perform feature reconstruction on the audio feature estimation value corresponding to the audio bitstream sample, to obtain a reconstructed audio sample corresponding to the audio bitstream sample.

Feature reconstruction herein is an inverse process of feature extraction, and dimension expansion is performed on the audio feature estimation value through feature reconstruction, thereby implementing a data decompression function.

In some embodiments, operation 442 may be implemented in the following manner: performing up-sampling processing on an audio feature estimation value corresponding to the audio bitstream sample, to obtain an up-sampling feature; and performing causal convolution processing on the up-sampling feature, to obtain the reconstructed audio sample corresponding to the audio bitstream sample.

Operation 45: Update parameters of the to-be-trained second encoding network based on the reconstructed audio sample, to obtain a trained second encoding network.

Before the second encoding network is used, the to-be-trained second encoding network needs to be trained, and then the trained second encoding network is deployed for applications. For example, the updating parameters of the to-be-trained second encoding network based on the reconstructed audio sample may be implemented in the following manner: after a value of a loss function of the second encoding network is determined based on the reconstructed audio sample and the first audio sample, determining whether the value of the loss function is greater than a preset threshold; and when the value of the loss function is greater than the preset threshold, determining an error signal of the second encoding network based on the loss function, back propagating the error information in the second encoding network, and updating model parameters of each layer during the propagation process. In this embodiment of this application, a form of the loss function is not limited. For example, the loss function may be a cross-entropy loss function or an L2 loss function.

The back propagation is described herein. Training sample data is inputted to an input layer of a neural network model, passes through a hidden layer, and finally reaches an output layer, and a result is outputted. This is a forward propagation process of the neural network model. Because there is an error between the output result and an actual result of the neural network model, an error between the output result and an actual value is computed, and the error is back propagated from the output layer to the hidden layer until the error is propagated to the input layer. In the back propagation process, the value of the model parameter is adjusted according to the error, namely, a loss function is constructed according to the error between the output result and the actual value, and a partial derivative of the loss function for the model parameter is solved layer by layer, thereby generating a gradient of the loss function for each layer of the model parameter. Because a direction of the gradient indicates the direction in which the error increases, the gradient of the model parameters is negated and summed with the original model parameters of each layer, and a resulting sum is then taken as the updated model parameters of each layer, thereby reducing the error caused by the model parameters. The above process is iterated continuously until convergence is achieved. The second encoding network is a neural network model.

When the first audio samples in operations 41 to 45 are audio signal samples, the audio bitstream samples are full-frequency bitstream samples of the audio signal samples.

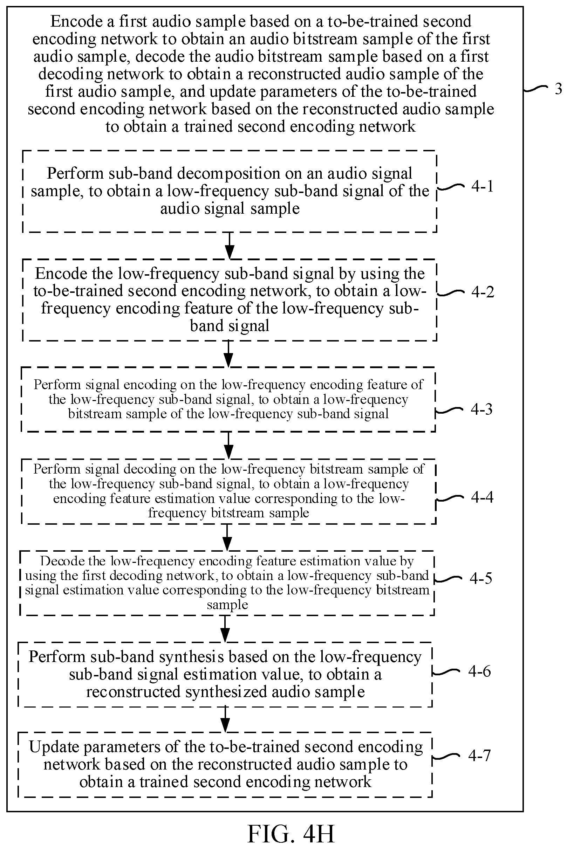

FIG. 4H is a schematic flowchart of a training method for an audio encoding/decoding system according to an embodiment of this application. When the aforementioned first audio sample is a low-frequency sub-band signal obtained by performing sub-band decomposition on an audio signal sample, the aforementioned audio bitstream sample is a low-frequency bitstream sample corresponding to the audio signal sample, operation 3 shown in FIG. 4H may be implemented through operation 4-1 to operation 4-7.

Operation 4-1: Perform sub-band decomposition on the audio signal sample, to obtain a low-frequency sub-band signal of the audio signal sample.

When the audio signal sample is an ultra-wide-band signal, sub-band decomposition is performed on the audio signal sample, to obtain the low-frequency sub-band signal and a high-frequency sub-band signal of the audio signal sample. In this embodiment of this application, frequency bands of the low-frequency sub-band signal and the high-frequency sub-band signal are not limited. To be specific, the low-frequency sub-band signal and the high-frequency sub-band signal obtained through decomposition may be two sub-band signals obtained through uniform division of a frequency band of the audio signal, or may be two sub-band signals obtained through non-uniform division of the frequency band of the audio signal. For example, if an effective bandwidth of an audio signal sample x is 0 to 16 kHz, the effective bandwidths of a low-frequency sub-band signal x_{LB} and a high-frequency sub-band signal x_{HB} may be 0 to 8 kHz and 8 to 16 kHz, respectively, and the effective bandwidths of the low-frequency sub-band signal x_{LB} and the high-frequency sub-band signal x_{HB} may alternatively be 0 to 6 kHz and 6 to 16 kHz, respectively. In addition, the number of division frequency bands is not limited in this embodiment of this application. To be specific, two sub-band signals may be obtained by uniform/non-uniform division; and alternatively, more than two sub-band signals, such as three, four, or more sub-band signals, may be obtained by uniform/non-uniform division of the frequency band of the audio signal.

Operation 4-2: Perform network encoding on the low-frequency sub-band signal by using the to-be-trained second encoding network, to obtain a low-frequency encoding feature of the low-frequency sub-band signal.

A processing procedure of operation 4-2 is similar to that of operation 41, with a difference in that a processing object in operation 4-2 is the low-frequency sub-band signal, while the processing object in operation 41 is the audio signal sample.

In this embodiment of this application, high frequency analysis may be performed on the high-frequency sub-band signal, to obtain a high-frequency encoding feature of the high-frequency sub-band signal. Due to a greater impact of the low-frequency sub-band signal compared to the high-frequency sub-band signal on audio encoding, differentiated signal processing is applied to the low-frequency sub-band signal and the high-frequency sub-band signal, so that feature dimensionality of the high-frequency encoding feature is lower than the feature dimensionality of the low-frequency encoding feature. The high frequency analysis is configured for performing dimension reduction on the high-frequency sub-band signal, to implement a function of data compression. The high-frequency encoding feature represents a high-frequency sub-band signal, and the feature dimensionality of the high-frequency encoding feature is less than the feature dimensionality of the high-frequency sub-band signal.

In some embodiments, the high frequency analysis may be implemented in the following manner: invoking a third encoding network to encode the high-frequency sub-band signal, to obtain a high-frequency encoding feature of the high-frequency sub-band signal, where the number of channels of the third encoding network is less than the number of channels of the second encoding network. The third encoding network may be a trained encoding network, or may be a to-be-trained encoding network. Another structure, similar to the second encoding network, such as the third encoding network is introduced to generate a low-dimension feature vector (i.e., a high-frequency encoding feature of the high-frequency sub-band signal). Compared to the low-frequency sub-band signal, the high-frequency sub-band signal contributes less significantly to the quality. Therefore, the third encoding network structure for the high-frequency sub-band signal does not need to be as complex as the second encoding network.

In some embodiments, since the high-frequency sub-band signal contributes less significantly to the quality compared to the low-frequency sub-band signal, an alternative method, such as bandwidth extension (recovering a wide-band speech signal from a frequency-band-limited narrow-band speech signal), may be employed to rapidly compress the high-frequency sub-band signal and extract the high-frequency encoding feature of the high-frequency sub-band signal.

In some embodiments, the high frequency analysis may be implemented in the following manner: performing frequency domain transform processing based on a plurality of sample points included in the high-frequency sub-band signal, to obtain transform coefficients corresponding to the plurality of sample points; dividing the transform coefficients corresponding to the plurality of sample points into a plurality of sub-bands; and performing averaging processing on the transform coefficients included in each sub-band, to obtain average energy corresponding to each sub-band, and using the average energy as a sub-band spectral envelope corresponding to each sub-band; and determining the sub-band spectral envelopes corresponding to the plurality of sub-bands as the high-frequency encoding features of the high-frequency sub-band signal.

A frequency domain transform method in this embodiment of this application includes a modified discrete cosine transform (MDCT), a discrete cosine transform (DCT), a fast Fourier transform (FFT), and the like. A frequency domain transform manner is not limited in this embodiment of this application. The averaging processing in this embodiment of this application includes arithmetic averaging and geometric averaging. The averaging processing manner is not limited in this embodiment of this application.

In some embodiments, the performing frequency domain transform processing based on a plurality of sample points included in the high-frequency sub-band signal, to obtain transform coefficients corresponding to the plurality of sample points includes: obtaining a reference high-frequency sub-band signal of a reference audio signal, where the reference audio signal is an audio signal adjacent to the audio signal; and based on a plurality of sample points included in the reference high-frequency sub-band signal and the plurality of sample points included in the high-frequency sub-band signal, performing discrete cosine transform processing on the plurality of sample points included in the high-frequency sub-band signal, to obtain the transform coefficients corresponding to the plurality of sample points included in the high-frequency sub-band signal.

In some embodiments, a process of performing geometric averaging processing on the transform coefficients included in each sub-band is as follows: a sum of squares of the transform coefficients corresponding to the sample points included in each sub-band is determined; and a ratio of the sum of squares to a quantity of the sample points included in the sub-band is determined as the average energy corresponding to each sub-band.

For example, for a high-frequency sub-band signal x_{HB}(n) including 320 points, the modified discrete cosine transform (MDCT) is invoked, to generate MDCT coefficients of the 320 points (i.e., transform coefficients corresponding to a plurality of sample points included in the high-frequency sub-band signal). Specifically, in a case of 50% overlap, high-frequency data of an (n+1)^{th} frame (i.e., the reference audio signal) and the high-frequency data of an n^{th} frame (i.e., the audio signal) may be merged (concatenated); the MDCT of resulting 640 points is then computed, and the MDCT coefficients of the first 320 points are obtained.

The MDCT coefficients of the 320 points are divided into N sub-bands (namely, the transform coefficients corresponding to the plurality of sample points are divided into a plurality of sub-bands). The sub-band herein is a group of a plurality of adjacent MDCT coefficients, and the MDCT coefficients of 320 points may be divided into 8 sub-bands. For example, 320 points may be evenly allocated, namely, each sub-band includes a same quantity of points. Certainly, in this embodiment of this application, the 320 points may not be non-uniformly divided. For example, a sub-band at a lower frequency includes fewer MDCT coefficients (a higher frequency resolution), and a sub-band at a higher frequency includes more MDCT coefficients (a lower frequency resolution).

According to a Nyquist sampling law (to recover an original signal from a sampled signal without distortion, a sampling frequency is greater than twice a highest frequency of the original signal; when the sampling frequency is less than twice the highest frequency of a spectrum, a spectrum of the signal is aliased; and when the sampling frequency is greater than twice the highest frequency of the spectrum, the spectrum of the signal is not aliased), the foregoing MDCT coefficients of 320 points represent a spectrum of 8 to 16 kHz. However, for the ultra-wide-band speech communication, the spectrum does not necessarily need to be set to 16 kHz. For example, if the spectrum is set to 14 kHz, only the MDCT coefficients of the first 240 points need to be considered, and correspondingly, the quantity of sub-bands may be controlled to be 6.

For each sub-band, the average energy of all MDCT coefficients in a current sub-band (namely, averaging processing is performed on the transform coefficients included in each sub-band) is computed as the sub-band spectral envelope (the spectral envelope is a smooth curve passing through main peak points of a spectrum). For example, if the MDCT coefficients included in the current sub-band are x (n), n = 1, 2, ..., and 40, the average energy is computed by using a geometric mean: Y=((x(1)²+x(2)²+...+x(40)²)/40). In a case where the MDCT coefficients of the 320 points are divided into 8 sub-bands, 8 sub-band spectral envelops may be obtained. These 8 sub-band spectral envelops are generated feature vectors F_{HB}(n) of the high-frequency sub-band signal, i.e., the high-frequency encoding feature.

Operation 4-3: Perform signal encoding on the low-frequency encoding feature of the low-frequency sub-band signal, to obtain a low-frequency bitstream sample of the low-frequency sub-band signal.

A processing procedure of operation 4-3 is similar to that of operation 42, with a difference in that a processing object in operation 4-3 is the encoding feature of the low-frequency sub-band signal, while the processing object in operation 42 is the encoding feature of the audio signal sample.

Operation 4-4: Perform signal decoding on the low-frequency bitstream sample of the low-frequency sub-band signal, to obtain a low-frequency encoding feature estimation value corresponding to the low-frequency bitstream sample.

A processing procedure of operation 4-4 is similar to that of operation 43.

In some embodiments, in this embodiment of this application, signal encoding may further be performed on a high-frequency encoding feature of a high-frequency sub-band signal, and signal decoding is performed on an obtained high-frequency bitstream sample of the high-frequency sub-band signal, to obtain a high-frequency encoding feature estimation value corresponding to the high-frequency bitstream sample.

Operation 4-5: Decode the low-frequency encoding feature estimation value by using the first decoding network, to obtain a low-frequency sub-band signal estimation value corresponding to a low-frequency bitstream sample.

A processing procedure of operation 4-5 is similar to that of operation 44, with a difference in that a processing object in operation 4-5 is the low-frequency encoding feature estimation value, while the processing object in operation 44 is the encoding feature estimation value.

In some embodiments, in this embodiment of this application, high frequency reconstruction processing may further be performed on the high-frequency encoding feature estimation value corresponding to the high-frequency bitstream sample, to obtain a high-frequency sub-band signal estimation value corresponding to the high-frequency bitstream sample.

The high frequency reconstruction and the high frequency analysis are inverse processes of each other. For example, when the encoder side invokes an encoding network to encode a high-frequency sub-band signal to obtain a high-frequency encoding feature, the decoder side invokes a decoding network to decode the high-frequency encoding feature estimation value, to obtain a corresponding high-frequency sub-band signal estimation value.

In some embodiments, when the encoder side performs bandwidth extension processing on the high-frequency sub-band signal to obtain the high-frequency encoding feature, the decoder side performs inverse processing of frequency-band extension on the high-frequency encoding feature estimation value, to obtain the high-frequency sub-band signal estimation value corresponding to the high-frequency bitstream sample.

In some embodiments, the performing inverse processing of frequency-band extension on the high-frequency encoding feature estimation value, to obtain the high-frequency sub-band signal estimation value corresponding to the high-frequency bitstream sample includes: performing frequency domain transform processing based on a plurality of sample points included in the low-frequency sub-band signal estimation value, to obtain transform coefficients corresponding to the plurality of sample points; and performing spectral repeat processing on second half transform coefficients among the transform coefficients corresponding to the plurality of sample points, to obtain a reference transform coefficient of a reference high-frequency sub-band signal; and performing gain processing on the reference transform coefficient of the reference high-frequency sub-band signal based on a sub-band spectral envelope corresponding to the high-frequency encoding feature estimation value, to obtain a gained reference transform coefficient; and performing inverse frequency domain transform processing on the gained reference transform coefficient, to obtain the corresponding high-frequency sub-band signal estimation value.

A frequency domain transform method in this embodiment of this application includes a modified discrete cosine transform (MDCT), a discrete cosine transform (DCT), a fast Fourier transform (FFT), and the like. A frequency domain transform manner is not limited in this embodiment of this application.

In some embodiments, the performing gain processing on the reference transform coefficient of the reference high-frequency sub-band signal based on a sub-band spectral envelope corresponding to the high-frequency encoding feature estimation value, to obtain a gained reference transform coefficient includes: dividing the reference transform coefficient of the reference high-frequency sub-band signal into a plurality of sub-bands based on the sub-band spectral envelop corresponding to the high-frequency encoding feature estimation value; and performing the following processing for any one of the plurality of sub-bands: determining first average energy corresponding to the sub-band in the sub-band spectral envelope, and determining second average energy corresponding to the sub-band; and determining a gain factor based on a ratio of the first average energy to the second average energy; and multiplying the gain factor by each reference transform coefficient included in the sub-band, to obtain the gained reference transform coefficient.

Operation 4-6: Perform sub-band synthesis based on the low-frequency sub-band signal estimation value, to obtain a reconstructed audio sample.

For example, the sub-band synthesis is an inverse process of sub-band decomposition. The decoder side performs sub-band synthesis on the low-frequency sub-band signal estimation value and the high-frequency sub-band signal estimation value, to recover the audio signal, where the reconstructed audio sample is the recovered reconstructed signal.

In some embodiments, the performing sub-band synthesis on the low-frequency sub-band signal estimation value and the high-frequency sub-band signal estimation value includes: performing up-sampling processing on the low-frequency sub-band signal estimation value, to obtain a low-pass filtered signal; and performing up-sampling processing on the high-frequency sub-band signal estimation value, to obtain a high-frequency filtered signal; and performing filtering synthesis on the low-pass filtered signal and the high-frequency filtered signal, to obtain a reconstructed audio sample.

Operation 4-7: Update parameters of the to-be-trained second encoding network based on the reconstructed audio sample, to obtain a trained second encoding network.

A processing procedure of operation 4-7 is similar to that of operation 45.

In some embodiments, a generative adversarial network includes a generator and a discriminator, the generator is a second audio encoding/decoding system, and the second audio encoding/decoding system includes a to-be-trained second encoding network and a first decoding network; and the to-be-trained second encoding network in operation 3 is trained in the following manner: alternately performing the following training tasks based on the generator and the discriminator in the generative adversarial network: training the generator based on a first audio sample, so that the generator generates a reconstructed audio sample based on the audio sample; training the discriminator based on the first audio sample and the reconstructed audio sample, so that the discriminator distinguishes the audio sample from the reconstructed audio sample, where when the generator is trained, parameters of the discriminator remain unchanged, and when the discriminator is trained, parameters of the generator remain unchanged.

When the parameters of the discriminator remain unchanged, a method for training the generator is similar to operation 3, namely, the generator is regarded as the first audio encoding/decoding system including the to-be-trained second encoding network.

As described above, the audio encoding method provided in this embodiment of this application may be implemented by various types of electronic devices. FIG. 5 is a schematic flowchart of an audio decoding method according to an embodiment of this application, and an audio encoding function is implemented by using the audio encoding method, and operation 101 to operation 103 are described below with reference to FIG. 5.

Operation 101: Acquire an audio signal.

In an example of acquiring the audio signal, in response to an audio collection instruction triggered by a transmitter (such as an initiator of a network conference, an anchor, or an initiator of a speech call), an encoder side invokes a built-in microphone of a terminal device on the encoder side to collect the audio signal, to acquire the audio signal (alternatively referred to as an input signal).

Operation 102: Invoke a trained second encoding network in an audio encoding/decoding system, to perform encode the audio signal, to obtain a second encoding feature of the audio signal, where the audio encoding/decoding system includes the trained second encoding network and a first decoding network.

In operation 102, a procedure of encoding the audio signal by using the trained second encoding network is similar to that in operation 41, with a difference in that a processing object in operation 102 is the audio signal, while the processing object in operation 41 is the first audio sample.

When the audio signal is an ultra-wide-band signal and needs sub-band decomposition, sub-band decomposition may be first performed on the audio signal, and then the sub-band signal is decomposed. A processing procedure is similar to that shown in FIG. 4H.

Operation 103: Perform signal encoding on the second encoding feature of the audio signal to obtain a second audio bitstream of the audio signal,

where both the first audio bitstream and the second audio bitstream can be decoded by the first decoding network to obtain a reconstructed audio signal corresponding to the audio signal, the first audio bitstream is obtained by processing the audio signal through the first encoding network, and the trained second encoding network is obtained by training the first encoding network by using the foregoing training method for the audio encoding/decoding system.

In some embodiments, operation 103 may be implemented in the following manner: performing quantization on the second encoding feature of the audio signal, to obtain an index value of the second encoding feature; and performing entropy encoding on the index value of the second encoding feature, to obtain a second audio bitstream of the audio signal.

As described above, the audio decoding method provided in this embodiment of this application may be implemented by various types of electronic devices. FIG. 6A is a schematic flowchart of an audio decoding method according to an embodiment of this application. The audio decoding method implements an audio decoding function, and the audio decoding method and the aforementioned audio encoding method are inverse processes of each other. The audio decoding method is described below with reference to operations shown in FIG. 6A.

Operation 201: Acquire an audio bitstream.

For example, after the audio bitstream is obtained through encoding by using the audio encoding method shown in FIG. 5, the audio bitstream is transmitted to a decoder side. After receiving the audio bitstream, the decoder side performs audio decoding on the audio bitstream, to reconstruct a reconstructed audio signal.

Operation 202: Perform signal decoding on the audio bitstream, to obtain an encoding feature estimation value corresponding to the audio bitstream.

Signal decoding is an inverse process of signal encoding. A process in which the decoder side decodes the received bitstream is an inverse process of an encoding process on the encoder side. Therefore, a value generated in the decoding process is an estimated value relative to the value in the encoding process. For example, the encoding feature estimation value generated in the decoding process is an estimated value relative to an encoding feature in the encoding process.

Operation 203: Invoke the first decoding network in the audio encoding/decoding system to decode the encoding feature estimation value, to obtain a reconstructed audio signal corresponding to the audio bitstream.

The decoding process is an inverse process of the encoding process. Since a process in which the decoder side decodes the received bitstream is an inverse process of the encoding process on the encoder side, the value generated in the decoding process is an estimated value relative to the value generated in the encoding process. For example, the reconstructed audio signal generated in the decoding process is an estimated value relative to the audio signal generated in the encoding process.

Here, the process of invoking the first decoding network in the audio encoding/decoding system to decode the encoding feature estimation value in operation 203 is similar to operation 44 described above, with a difference in that a processing object in operation 203 is the encoding feature estimation value of the audio bitstream, while the processing object in operation 44 is the encoding feature estimation value of the audio bitstream sample.

An exemplary application of this embodiment of this application in an actual application scenario is described below.

This embodiment of this application may be applied to various audio scenarios, such as a speech call and instant messaging. The following description is provided below by taking a speech call as an example.

In the related art, the principle of speech encoding is generally as follows: speech encoding may directly encode speech waveform samples one by one; or based on a human vocal principle, relevant low-dimensional features are extracted, the encoder side encodes these features, and the decoder side reconstructs the speech signal based on these parameters.

The foregoing encoding principle is derived from speech signal modeling, i.e., a signal processing-based compression method, which fails to ensure the encoding quality of the audio. In view of this, in this embodiment of this application, a deep learning-based technology is employed to improve encoding/decoding efficiency while ensuring the speech quality. Currently, the deep learning-based technology can indeed bring an effect of a low bit rate and high quality. However, this method alternatively has the following two typical problems:
(1) The encoding/decoding method has relatively high complexity. For some realtime audio and video application scenarios, excessively high complexity may impede the widespread promotion of audio applications. In addition, a deep learning-based encoding/decoding system has an excessively long training period, varying from several days to several weeks, and has a high iteration cost.
(2) To ensure a forward compatibility rule in the communication system, old versions of an encoder and a decoder can be replaced first, and then the encoder and the decoder are updated, resulting in substantial engineering reconstruction challenges.

To resolve the foregoing problem, an embodiment of this application provides a speech encoding and decoding method (i.e., an audio encoding method and an audio decoding method). After processing is performed based on an audio signal characteristic and based on a neural network (NN) technology, a feature vector having lower dimensionality than that of an input is obtained. An operation similar to "partitioning" is employed inside the neural network, to reduce algorithm complexity and improve an encoding effect. The decoder side decodes a received bitstream to obtain a feature vector, and invokes an inverse process of a corresponding encoder side, to complete signal reconstruction. Particularly, an operation similar to "partitioning" is employed inside the neural network of the decoder side, to reduce algorithm complexity. Based on the foregoing description, to ensure forward compatibility of the encoding/decoding system, an embodiment of this application provides a pre-training decoder mechanism (i.e., a training method for an audio encoding/decoding system). According to the foregoing solution, an encoding network (represented as a first encoding network) and a decoding network (represented as a first decoding network) are trained first. Then, in a case where parameters of the first decoding network remain unchanged, the encoding network is re-configured and re-trained, to obtain a second encoding network. Specifically, regardless of whether the feature vector is processed and compressed by the first encoding network or the second encoding network, invoking the first decoding network may recover high-quality speech. By fixing the parameters of the decoding network while modifying the encoding network in various ways, the risk of forward compatibility is resolved. Therefore, a version of the encoding network can be updated without affecting online services. In addition, modifying the encoding network not only can improve the encoding effect, but also can perform lightweight reconstruction on the encoding network, thereby reducing the encoding complexity.

This embodiment of this application may be applied to a speech communication link shown in FIG. 6B. Taking a voice over Internet protocol (VoIP) conference system as an example, a speech encoding and decoding technology involved in this embodiment of this application is deployed in encoding and decoding parts, to resolve a basic function of speech compression. An encoder is deployed in an upstream client 601. A decoder is deployed in a downstream client 602. A speech is acquired by the upstream client, undergoes pre-processing enhancement and encoding, and a resulting encoded bitstream is transmitted over the network to the downstream client 602. The downstream client 602 then performs decoding, enhancement, and other processing to playback the decoded speech at the downstream client 602.

Considering forward compatibility (namely, a novel encoder is compatible with the existing encoder), a transcoder needs to be deployed in a background (i.e., a server) of a system, to resolve a problem of interconnection between the novel encoder and the existing encoder. For example, if a transmitting end (the upstream client) is a novel NN encoder, a receiving end (the downstream client) is a public switched telephone network (PSTN) (G.722). In the background, an NN decoder needs to be executed to generate a speech signal, and a G.722 encoder is then invoked to generate a specific bitstream, thereby implementing a transcoding function, so that the receiving end performs correct decoding based on the specific bitstream.

Before a training method for an audio encoding/decoding system according to an embodiment of this application is specifically described below, a dilated convolution network and model training are first described.

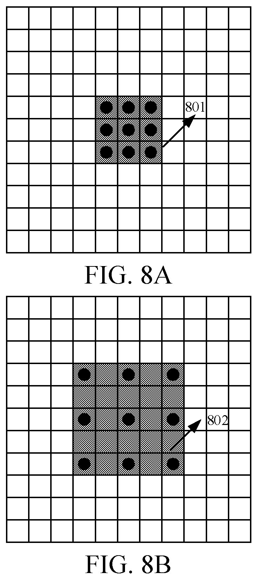

FIG. 8A is a schematic diagram of a conventional convolution (such as causal convolution) network according to an embodiment of this application, and FIG. 8B is a schematic diagram of a dilated convolution network according to an embodiment of this application. Compared with the conventional convolution network, dilated convolution can increase a receptive field while keeping a size of a feature map unchanged, and can further avoid errors caused by up-sampling and down-sampling. Although convolution kernel sizes shown in FIG. 8A and FIG. 8B are both 3×3, a receptive field 801 in the conventional convolution shown in FIG. 8A reaches only 3, and the receptive field 802 in the dilated convolution shown in FIG. 8B reaches 5. To be specific, for the convolution kernel with a size of 3×3, the receptive field of conventional convolution shown in FIG. 8A is 3, and a dilation rate (a quantity of intervals of points in the convolution kernel) is 1; the receptive field of dilated convolution shown in FIG. 8B is 5, and the dilation rate is 2.

The convolution kernel may further move on a plane similar to that in FIG. 8A or FIG. 8B, which involves a stride rate (step size). For example, when the convolution kernel shifts by one unit each time, the corresponding stride rate is 1.

In addition, there is a concept of a convolution channel number, namely, parameters corresponding to a quantity of convolution kernels are employed to perform convolution analysis. Theoretically, a larger number of channels indicates a more comprehensive signal analysis and higher accuracy. However, a larger number of channels indicates higher complexity. For example, a tensor of 1×320 may be subjected to a 24-channel convolution operation, resulting in an output tensor of 24×320.

A size of a dilated convolution kernel (for example, for a speech signal, the size of the convolution kernel may be set to 1×3), the dilation rate, the stride rate, and the number of channels may be self-defined according to an actual application requirement, which are not specifically limited in this embodiment of this application.

For model training, parameters of the encoding network and the decoding network may be adjusted at the same time in a training process. After the encoding network and the decoding network converge, the trained encoding network and the trained decoding network may be integrated into an audio encoding/decoding system, to implement high-quality compression. However, in an iteration process of the audio encoding/decoding system, it is desirable on one hand to enhance compression quality through system updating, while on the other hand, forward compatibility of the bitstream is required. To be specific, a bitstream obtained through compression by using a novel version encoder may be accurately decoded by an old version decoder, and high-quality speech may be generated. For an encoding/decoding system based on a neural network, both a novel encoding network and an old encoding network are required to match a same old decoding network, i.e., capable of achieving a high-quality compression effect.

The novel encoding network and the old encoding network mainly include the following two cases:

First, the novel encoding network and the old encoding network have identical parameters, and only for a special objective, a novel encoding network is re-trained. A typical scenario is to improve an encoding effect of the encoding network in a language, or improve an encoding effect of different audio signals.

Second, the novel encoding network and the old encoding network have completely different structures. For example, based on an original encoding network structure, the number of network layers is increased, or a network structure or a number of parameters of a particular module is changed. For example, complexity of the encoding network is increased, and the encoding effect can be improved by increasing computational capacity. The encoding network structure may be tailor-made, to reduce complexity of the encoder to adapt to lightweight applications.

The model training process may be summarized as follows: based on prepared training data, and a pre-designed network structure, loss function, optimizer, and the like, the training data is inputted into the model; gradients are computed via a back-propagation algorithm, and model parameters are updated by using the optimizer; a validation dataset is inputted into the model to compute a loss function value and prediction accuracy, thereby evaluating the performance of the model; additionally, based on a validation result, hyper-parameters of the model, such as a learning rate and a regularization coefficient, are adjusted to achieve an optimal training effect, and the model is saved; and finally, a test dataset is inputted into the model to compute a prediction result and accuracy, to evaluate a generalization capability of the model. After the foregoing training process is completed, the model may be deployed and applied, and the trained model is deployed to an actual application for predicting novel input data.

The field of speech encoding and decoding mainly involves an end-to-end neural network: the neural network is divided into two parts: an encoding network and a decoding network. For each part, a network structure is defined in advance. A function of the encoding network is to map an inputted time-domain signal to a low-dimension feature vector by means of a nonlinear prediction capability of the encoding network. The dimensionality of the feature vector is smaller than that of an inputted time-domain signal, thereby achieving a compression objective. For example, after the inputted time-domain signal is processed by the encoding network, a low-dimensional feature vector is obtained. A component of each dimension is [-1, 1], to facilitate normalization. Next, all components of the low-dimensional feature vector are quantized at a specified compression rate, to obtain a quantized low-dimensional feature vector. The function of the decoding network is to predict the time-domain signal having the same dimensionality as the input based on the quantized low-dimensional feature vector and by means of the nonlinear prediction capability of the decoding network. Moreover, it is theoretically expected that the predicted time-domain signal is approximate to the inputted time-domain signal. In a case of a limited compression rate (determining quantization accuracy of the low-dimensional feature vector), a smaller prediction error indicates better quality of a reconstructed speech signal. Therefore, the end-to-end neural network training is, based on the model training and deployment manner described above, to train a combination of an encoding network and a decoding network based on the training data. In the foregoing combination, data compression may be performed on the inputted time-domain signal by using the encoding network, and the speech signal may be recovered by using the decoding network.

The training method for the audio encoding/decoding system provided in this embodiment of this application is described below.

The training method for the audio encoding/decoding system provided in this embodiment of this application is implemented by using an extensible neural network training platform shown in FIG. 7.

An encoding network (represented as a first encoding network) and a decoding network (represented as a first decoding network) are first trained by using the extensible neural network training platform.

Next, a first audio encoding/decoding system is constructed based on the first encoding network and the first decoding network. For an input audio signal x(n) of an n^{th} frame, the first encoding network is invoked to obtain a low-dimensional feature vector F₁(n), and the dimensionality of the feature vector F₁(n) is lower than that of the input audio signal, thereby reducing a data volume. For example, for each frame x(n), a neural network (an encoding part) is invoked to generate the feature vector F₁(n) with lower dimensionality. This embodiment of this application does not limit another NN structure, such as an auto-encoder, a full-connection (FC) network, a long short-term memory (LSTM) network, or a convolution neural network (CNN) + LSTM. An operation similar to "partitioning" is employed inside the neural network, to reduce algorithm complexity and improve an encoding effect. For F₁(n), quantization and encoding are performed by employing code-books with different quantization accuracy, thereby achieving multirate encoding/decoding effect.

Regarding a high-frequency sub-band signal x_{HB}(n) obtained by performing sub-band decomposition on the input audio signal, considering that high-frequency components are less critical to quality than low-frequency components, an alternative solution may be employed to extract the feature vector F_{HB}(n) from the high-frequency sub-band signal x_{HB}(n). For example, a frequency band extension technology based on speech signal analysis may generate the high-frequency sub-band signal by using only a minimal number of bits; and alternatively, a neural network (NN) structure identical to that used for low-frequency sub-band signals or a simpler network (such as one that outputs a feature vector smaller than the low-frequency feature vector F_{LB}(n)) may be employed.

Vector quantization or scalar quantization is performed on the feature vector corresponding to the sub-band signal (namely F_{LB}(n) and F_{HB}(n)), then entropy encoding is performed on quantized values, and resulting encoded bitstreams (a low-frequency bitstream and a high-frequency bitstream) are transmitted to the decoder side.

The first decoding network is invoked to process an estimated value ${F}_{1}^{′} \left(n\right)$ of the feature vector obtained by decoding, to generate an audio signal estimation ${valuex}_{1}^{′} \left(n\right)$, thereby achieving an audio decoding effect.

Based on the first encoding network and the first decoding network, parameters of the first decoding network remain unchanged, and the extensible neural network training platform is invoked for re-training to obtain a second encoding network.

The second audio encoding/decoding system is constructed based on the second encoding network and the first decoding network. For the input audio signal x(n) of the n^{th} frame, the second encoding network is invoked to obtain a low-dimension feature vector F₂(n) is obtained, and dimensionality of the feature vector F₂(n) is smaller than the dimensionality of the input audio signal, thereby reducing a data volume. Vector quantization or scalar quantization is performed on the feature vector F₂(n), entropy encoding is performed on a quantized index value, and the quantized index value is transmitted to the decoder side.

The first decoding network is invoked to process an estimated value ${F}_{2}^{′} \left(n\right)$ of the feature vector obtained by decoding, to generate an audio signal estimation value ${x}_{2}^{′} \left(n\right)$, thereby completing decoding.

Through the foregoing operations, a single decoder (implemented by the decoding network) is made compatible with multiple different encoders (each implemented by the encoding network), thereby forming one or more audio encoding/decoding systems (i.e., at least one audio encoding/decoding system). The one or more encoding and decoding systems may perform speech compression on the same speech input. Since the foregoing one or more encoding/decoding systems employ the same decoder, forward compatibility of bitstreams in speech communication is achieved, and a substantial room is provided for extension of the encoder.

The following specifically describes the training method for the audio encoding/decoding system, the audio encoding method, and the audio decoding method provided in this embodiment of this application.

In some embodiments, a speech signal with a sampling rate Fs=16,000 Hz is taken as an example (the method provided in this embodiment of this application is further applicable to scenarios with other sampling rates, including but not limited to: 8000 Hz, 32000 Hz, 48000 Hz). Meanwhile, assuming that a frame length is set to 20 ms, a sampling rate of Fs=16000 Hz is equivalent to 320 sample points included in each frame.

Referring to the first encoding network and the first decoding network shown in FIG. 7, an encoder side and a decoder side are described in detail below.

Processes of the first encoding network and the first decoding network are as follows:
For an audio signal (a monophonic signal) with a sampling rate of Fs=16,000 Hz, the input signal of the n^{th} frame includes 320 sample points, and is denoted as the input signal x(n).

Operation 11: Performing encoding by using a first encoding network.

Based on the input signal x(n), the first encoding network is invoked to generate a feature vector F₁(n) with lower dimensionality. The dimensionality of the input signal x(n) is 320, and the dimensionality of the feature vector F₁(n) is 56, so that as can be seen from the data volume, the first encoding network plays a role in dimension reduction, thereby achieving a function of data compression. This embodiment of this application is not limited to the dimensionality of F₁(n), and another dimensionality less than that of x(n) may alternatively employed.

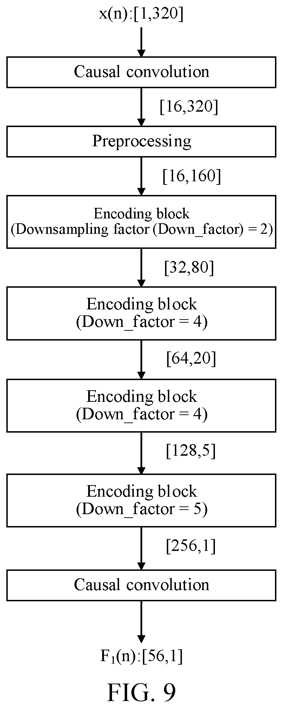

Referring to a network structural diagram of a first encoding network shown in FIG. 9, the following specifically describes a process in which the first encoding network performs data compression.

First, 16-channel causal convolution is invoked, and an inputted tensor (i.e., a vector) may be extended into a tensor of 16 × 320.

The tensor of 16×320 is subsequently preprocessed. For example, a convolution operation is performed on the tensor of 16×320, and then a pooling operation with a factor of 2 and an activation function that may be a PReLU is performed, thereby generating a tensor of 16×160.

Next, encoding blocks with four different down-sampling factors (Down_factor) are cascaded. Each encoding block includes a residual block, a convolution layer, and a pooling layer. Each residual block includes five residual units based on dilated convolution (feature dimensionality of an input and an output of each residual unit remains unchanged); one convolution layer is configured to double the number of input channels, and the activation function may be PReLU, thereby ensuring the data volume and avoiding data loss; and the pooling layer is a pooling operation including Down_factor for completing down-sampling and implementing data compression. The down_factors of the four encoding blocks are herein set to 2, 4, 4, and 5, respectively. Therefore, the numbers of output channels of the four encoding blocks are set to 32, 64, 128, and 256, respectively. After being processed by the four encoding blocks, the inputted tensor of 16 × 160 is converted into tensors of 32 × 80, 64 × 20, 128 × 5, and 256 × 1, respectively. The number of encoding blocks is not limited in this embodiment of this application, and may be, for example, 2, 3, 4, 5, or any other suitable positive integer. Furthermore, the number of residual units in the encoding block is not limited in this embodiment of this application, and may be any positive integer such as 2, 3, 4, 5, and 6. The numbers of residual units in multiple encoding blocks may be the same or different. For example, one encoding block may include four residual units while another encoding block may include five residual units.

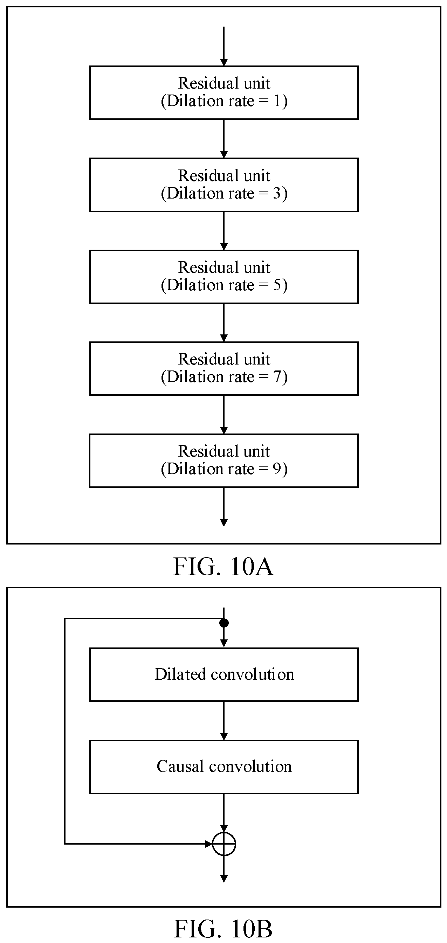

The residual unit is further described herein. The residual unit refers to a module in a deep neural network, which introduces cross-layer connections into the neural network to facilitate optimization of the neural network during training and avoid problems such as gradient vanishing or gradient explosion. A core idea is to perform residual learning on the input inside the module, where a direct path allows input information to bypass certain layers and be transmitted directly to the output, thereby enabling the network to better utilize shallow-level feature information during the learning process. FIG. 10A is a schematic structural diagram of a residual block used in an encoding block in a first encoding network. The residual block includes four residual units based on dilated convolution, and each residual unit includes a dilated convolution block having a specified dilation rate. To be specific, each dilated convolution block includes a convolution operator having the specified dilation rate (such as a dilation rate = 3). In this embodiment of this application, the dilated convolution blocks with five progressive dilation rates are employed, which is equivalent to extracting features of the input at different resolutions by using different receptive fields, so that data can be better analyzed comprehensively. After residual processing through five dilated convolution blocks with specified dilation rates, a result is added to the input passed via a skip connection, yielding an output result of the residual block, and the output result is then outputted to the convolution layer connected to the residual block.

Any one of the residual units in FIG. 10A is further described, as shown in FIG. 10B. Any one of the residual units includes at least one dilated convolution (configured for expanding a receptive field) with a specified dilation rate, and a PReLU may be used as an activation function; and furthermore, one or more causal convolutions (configured for extracting local information) may be cascaded, and the PReLU may be used as an activation function. A size of a convolution kernel of the dilated convolution with the specified dilation rate may be 3, 5, 7, 9, or the like, and a size of a convolution kernel of the causal convolution may be 1, 3, or the like. The size of the convolution kernel of the dilated convolution or the causal convolution of the specified dilation rate is not limited in this embodiment of this application. Furthermore, the causal convolution or the dilated convolution in this embodiment of this application may alternatively be implemented by another convolution unit with a specific similar or equivalent function.

In addition, for the residual unit, to reduce algorithm complexity, a group convolution algorithm is introduced. The group convolution is to divide input channels into a plurality of groups to perform a convolution operation, and connection is only established between the input channel and the output channel in each group. It is assumed that the number of input channels is 16, and the number of output channels is 32. If the number of groups is 1, each input channel is associated with 32 output channels. If the number of groups is 2, the 16 input channels are first divided into two groups: channels 0 to 7 and channels 8 to 15. In both groups, the input channels are associated only with the output channels belonging to the same group. For example, input channels 0 to 7 in a first group are associated with output channels 0 to 15, while input channels 8 to 15 in a second group are associated with output channels 16 to 31. For example, the 0^{th} output channel is exclusively associated with input channels 0 to 7 and not associated with input channels 8 to 15; and similarly, the 25^{th} output channel is exclusively associated with input channels 8 to 15 and not associated with input channels 0 to 7. By comparison, it can be seen that introducing group convolution may prevent each input channel from being connected to all output channels, thereby reducing the number of connections and lowering complexity. Certainly, since a larger number of groups reduces the degree of association between the input channels and the output channels, and may further affect an encoding effect, the larger number of groups is not generally preferable. In this embodiment of this application, the dilated convolutions included in the five residual blocks corresponding to the four encoding blocks may be configured with different numbers of groups, where specific group number configurations are shown in Table 1.

**Table 1. Configuration of numbers of groups used by residual units in different encoding blocks**

| Encoding block | Number of groups |
|---|---|
| Encoding block (Down _ factor = 2) | 2 |
| Encoding block (Down _ factor = 4) | 4 |
| Encoding block (Down _ factor = 4) | 4 |
| Encoding block (Down _ factor = 5) | 4 |

Finally, after the tensor of 256×1 is processed by causal convolution similar to preprocessing, a 56-dimensional feature vector F₁(n) may be outputted. As computed by the first encoding network, each value in the 56-dimensional feature vector F₁(n) falls within a range of [-1, 1].

Operation 12: Perform quantization and encoding.

For the low-dimensional feature vector F₁(n), a method including scalar quantization (where each component is separately quantized) and entropy encoding may be performed. In addition, this embodiment of this application does not limit a technical combination of vector quantization (where a plurality of adjacent components are combined into a vector for joint quantization) and entropy encoding.

The quantization and encoding for the low-dimensional feature vector F₁(n) are described. According to the foregoing descriptions, after the input signal is processed by using the first encoding network, the 56-dimensional feature vector F₁(n) is obtained. An embodiment of this application provides a method based on scalar quantization and entropy encoding, including: (1) for each dimension in F₁(n), an interval [-1, 1] is evenly divided into 11 equal portions to form a code-book containing 11 elements, and each dimensional value is quantized into one of the 11 elements; (2) according to Shannon entropy theorem, for the code-book containing 11 uniformly-distributed elements, an entropy (average bits) is $- 1 ∗ log 2 \left(\frac{1}{11}\right) = 3.46$ bits, therefore, the average number of bits corresponding to a low-frequency sub-band signal per frame is 193.76 bits; and (3) with a framing method of 20 ms, there are 50 frames in one second, thus, an average bit rate is 9.69 kbps (i.e., a bit rate mode). According to an entropy encoding theory, probability distribution statistics may be performed on each of the foregoing dimensions, to generate 56 code-books. Generally, the dimensions are unevenly distributed, and therefore, an actual bit rate is around 9.69 kbps or less than 9.69 kbps. Generally, a higher bit rate mode indicates that more bits are employed by the encoder for encoding, and higher quality of reconstructed speech. In this embodiment of this application, the bit rate mode is not limited, and may be 8.88 kbps, 6.50 kbps, or the like.

In conclusion, after quantization and encoding, a bitstream may be generated. In a range of 5 kbps to 10 kbps, in this embodiment of this application, high-quality compression may be implemented for a 16 kHz wide-band signal.

Operation 13: Perform quantization and decoding.

Quantization and decoding are inverse processes of quantization and encoding. Entropy decoding is first performed on received bitstreams (including a high-frequency bitstream and a low-frequency bitstream), and an estimated value *F*'₁(*n*) of the low-dimensional feature vector is obtained by looking up a quantization table.

Operation 14: Perform decoding by using the first decoding network.

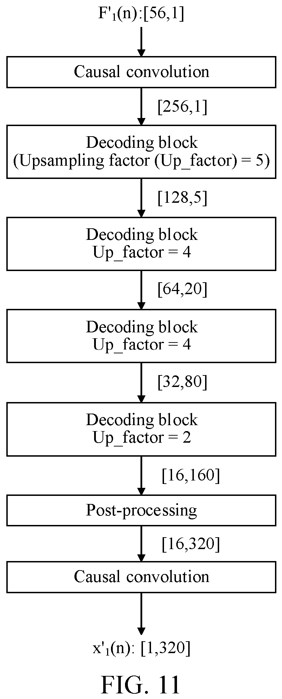

First, based on the estimated value *F*'₁(*n*) of the low-dimensional feature vector, the first decoding network shown in FIG. 11 is invoked to generate an estimated value *x*'₁(*n*) of an audio signal, namely, the audio signal is reconstructed. The first decoding network is similar to the first encoding network. For example, causal convolution is employed, and a post-processing structure is similar to a pre-processing structure in the first encoding network. The structure of the decoding block is symmetric to that of the encoding block on the encoder side. The encoding block on the encoder side performs dilated convolution first, and then performs pooling to achieve down-sampling, and the decoding block on the decoder side performs pooling first to achieve up-sampling, and then performs dilated convolution. A specific process of the first decoding network is as follows:

First, a causal convolution is invoked, and an inputted tensor *F*'*_{LB}*(*n*) may be extended from 56 × 1 to 256 × 1.

Next, decoding blocks with four different up-sampling factors (up_factor) are cascaded. Each decoding block includes a convolution layer, an up-sampling module, and a residual block, where one convolution layer is configured to half the number of input channels; one up-sampling module includes a particular up_factor, which is configured to complete up-sampling; and one residual block includes five residual units based on dilated convolution. The up_factors of the four decoding blocks are set to 5, 4, 4, and 2, respectively. Therefore, the numbers of output channels of the four decoding blocks are set to 128, 64, 32, and 16, respectively. After being processed by the four decoding blocks, the tensor of 256 × 1 is converted into tensors of 128 × 5, 64 × 20, 32 × 80, and 16 × 160, respectively. The number of decoding blocks is not limited in this embodiment of this application, and may be any positive integer such as 2, 3, 4, and 5.

For the up-sampling module including the particular up_factor, an up-sampling operation may be completed by employing a repeat operation in a repeated filling manner. In this way, complexity can be reduced.

A configuration of the five dilated convolution-based residual units on the decoder side is similar to a configuration of the residual unit on the encoder side, and includes, but is not limited to, an internal structure of the residual unit, a convolution kernel size, a dilation rate, and the like. The configuration of group numbers used for dilated convolution in the decoding block is shown in Table 2. In the decoding block, a larger number of groups (i.e., two groups) are employed, to associate more input channels and output channels, thereby improving speech reconstruction quality.

**Table 2: Configuration of group numbers used for residual units in different decoding blocks**

| Decoding block | Number of groups |
|---|---|
| Decoding block (Up _ factor = 5) | 4 |
| Decoding block (Up _ factor = 4) | 4 |
| Decoding block (Up _ factor = 4) | 2 |
| Decoding block (Up _ factor = 2) | 2 |

Then, post-processing is performed on the tensor of 16 × 160 outputted by the cascaded decoding blocks. For example, a repeat operation with a factor of 2 is performed on the tensor of 16 × 160 outputted by the cascaded decoding blocks, to complete up-sampling, and a convolution operation is then performed, which may employ an activation function such as PReLU, to generate a tensor of 16×320.

Finally, a causal convolution is invoked, and an inputted tensor of 16 × 320 may be converted into a tensor of 1 × 320, to reconstruct an input signal.

A training process for the first encoding network and the first decoding network is described below:

In this embodiment of this application, data may be acquired to perform joint training on relevant networks on the encoder end and the decoder end, thereby obtaining optimal parameters. Users simply need to prepare data and configure the corresponding network structure. Once training is performed in the background, the trained model may be deployed for use.

In the encoding/decoding system for the end-to-end neural network, an adversarial learning training mechanism may be used. A training principle of adversarial learning is to improve performance of the generator by enabling adversarial interaction between the generator and the discriminator. Specifically, the generator attempts to generate realistic samples to deceive the discriminator, while the discriminator attempts to identify a difference between real samples and generated samples. This adversarial process may be continuously iterated until the quality of the sample generated by the generator is high enough.

When the adversarial learning training mechanism is employed to train the first encoding network and the first decoding network, the first encoding network and the first decoding network may be collectively employed as the generator. The performance of the first encoding network and the first decoding network is enhanced through the adversarial interaction between the generator and the discriminator.

As described above, after the first encoding network and the first decoding network are trained, the first audio encoding/decoding system is obtained. In practical applications, there is still a need for further version updates, such as fine tuning an effect for a specific application (such as enhancing an adaptation capability for a particular language), further improving speech quality by increasing the complexity of the encoding network, and serving certain lightweight applications by reducing the complexity of the encoding network.

The foregoing update requirement is based on an essential prerequisite that the decoder side of the previously released older version is capable of correctly decoding the bitstream generated by the encoder side of the new version. For the audio encoding/decoding system based on the end-to-end neural network, the encoding network needs to be re-trained after the parameters of the decoding network remain unchanged.

Similar to the training process of the first encoding network and the first decoding network, the adversarial learning training mechanism may be employed in a second audio encoding/decoding system (including a second encoding network and the first decoding network) based on the end-to-end neural network. The adversarial interaction training principle is to improve the performance of the generator by enabling adversarial interaction between the generator and the discriminator.

A difference from the training process of the first encoding network and the first decoding network lies in that: a training process of the second encoding network and the first decoding network is based on a model (including parameters) trained by the first encoding network and the first decoding network. A training process of the second encoding network and the first decoding network is as follows:
(1) Model parameters trained by the first encoding network and the first decoding network are loaded.
(2) In an extensible neural network training platform, a configuration of the second encoding network is employed to replace the first encoding network, to modify the configuration of the encoding network. The configuration includes, but is not limited to, a model structure, a loss function, an optimizer, and the like.

The second encoding network is flexibly set. To be specific, relative to the first encoding network, model complexity may be increased to improve the quality, or the model complexity may be reduced to adapt to a lightweight application. The aforementioned modification of the encoding network configuration includes, but is not limited to: (1) a "homogeneous" configuration, where the first encoding network and the second encoding network have identical network structure and parameters, namely, the second encoding network is a homogeneous network of the first encoding network, and the second encoding network is obtained by retraining through modifications such as changes in training data or training policies; (2) a "heterogeneous" configuration, where the first encoding network and the second encoding network have different network structures and parameter quantities (for example, the second encoding network has more layers than the first encoding network, or the dimensionality of intermediate variables in certain layers of the second encoding network is increased), namely, the second encoding network is a heterogeneous network of the first encoding network. In addition, changes in training data or training policies in the "homogeneous" configuration may further be applied to a scenario of the "heterogeneous" configuration.

In this embodiment of this application, gradient update in the first decoding network needs to be set to false. By setting the gradient update of the first decoding network to false during the end-to-end training of the second encoding network and the first decoding network, only the parameters of the first decoding network remain unchanged, so that the first decoding network does not participate in gradient computation. In this way, when the second encoding network and the first decoding network are re-trained, any parameter update is performed only in the second encoding network.

The training data for training the second encoding network and the first decoding network may be identical to or different from the training data for training the first encoding network and the first decoding network.

By means of the foregoing setting, the second encoding network and the first decoding network, i.e., the second audio encoding/decoding code system, are obtained. In this way, the bitstream forward compatibility is ensured: compression is completed based on the feature vector *F*₁(*n*) generated by the first encoding network, and compression is completed based on the feature vector *F*₂(*n*) generated by the second encoding network. The feature vector *F*₁(*n*) and the feature vector *F*₂(*n*) may be decoded by the same first decoding network after being quantized and decoded, thereby generating a speech signal.

The second encoding network and the first decoding network may be deployed for use after being trained. The following describes an application of the second encoding network and the first decoding network:

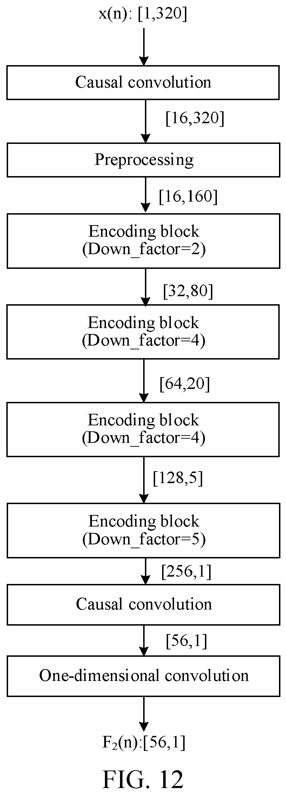

The second encoding network shown in FIG. 12 differs from the first encoding network in that a one-dimensional convolution layer is cascaded at the end of the first encoding network. Dimensionality of an input variable of the one-dimensional convolution layer is [56, 1], and the dimensionality of an output variable *F*₂(*n*) is [56, 1]. By increasing the number of layers of the encoding network, a feature extraction capability of the encoding network can be improved. Similarly, the number of layers of the encoding network may be further increased. For example, one or more residual units are further added to the one-dimensional convolution layer.

The quantization and encoding process for *F*₂(*n*) may be identical to the quantization and encoding process for *F*₁(*n*). In this way, an operation on the encoder side is completed.

On a decoder side, consistent with the foregoing embodiment, an estimated value *F*'₂(*n*) of a low-dimensional feature vector is obtained by decoding, and the first decoding network is invoked to generate an estimated value *x*'₂(*n*) of an input signal. Operations performed on the decoder side are the same as in the foregoing embodiment. Particularly, the first decoding network (with same parameters) is reused on the decoder side. In this way, the forward compatibility problem is resolved.

In conclusion, the training method for the audio encoding/decoding system, the audio encoding method, and the audio decoding method provided in the embodiments of this application achieve a suitable integration of signal decomposition, signal processing technology, and deep neural networks. Compared with signal processing solutions, the audio quality is improved significantly while ensuring acceptable complexity.

The audio encoding method or the audio decoding method provided in the embodiments of this application is described with reference to an example of an application and implementation of the terminal device provided in the embodiments of this application. An embodiment of this application further provides an audio encoding apparatus and an audio decoding apparatus. In practical applications, functional modules in the audio encoding apparatus and the audio decoding apparatus may be cooperatively implemented by a hardware resource of an electronic device (such as a terminal device, a server, or a server cluster), a computing resource such as a processor, a communication resource (for example, configured for supporting implementation of various communication manners such as optical cables and cellular communications), and a memory. FIG. 3A shows a training apparatus 555 of an audio encoding/decoding system stored in a memory 550, FIG. 3B shows an audio encoding apparatus 655 stored in a memory 650, and FIG. 3C shows an audio encoding apparatus 755 stored in a memory 750. These apparatuses may be implemented in a form of software such as programs and plug-ins, for example, as software modules developed by using programming languages such as C/C++ or Java, as application software or dedicated software modules in large-scale software systems designed in programming languages such as C/C++ or Java, or as application programming interfaces, plug-ins, cloud services, or other implementation forms. Different implementations are provided below as an example.

The training apparatus 555 for the audio encoding/decoding system includes a series of modules, including a first acquiring module 5551, a determining module 5552, a construction module 5553, and a training module 5554. The following further describes how all modules in the training apparatus 555 for the audio encoding/decoding system provided in this embodiment of this application cooperate to implement a training solution for the audio encoding/decoding system.

The first acquiring module 5551 is configured to acquire a first audio encoding/decoding system, where the first audio encoding/decoding system includes a first encoding network and a first decoding network; the determining module 5552 is configured to generate a to-be-trained second encoding network corresponding to the first encoding network in response to a configuration request for the first encoding network; and the training module 5553 is configured to encode a first audio sample based on the to-be-trained second encoding network, to obtain an audio bitstream sample of the first audio sample, decode the audio bitstream sample based on the first decoding network, to obtain a reconstructed audio sample of the first audio sample, and update parameters of the to-be-trained second encoding network based on the reconstructed audio sample, to obtain a trained second encoding network.

In some embodiments, the configuration request includes a homogeneous network configuration request for the first encoding network, and the homogeneous network configuration request is configured for indicating modification of first configuration data including at least one of: a second audio sample for training the first audio encoding/decoding system, and a training policy for training the first audio encoding/decoding system.

In some embodiments, when the homogeneous network configuration request is configured for indicating modification of the second audio sample, the first audio sample is a second audio sample modified based on the homogeneous network configuration request; and when the homogeneous network configuration request is configured for indicating modification of the training policy, a modified training policy is configured for training the to-be-trained second encoding network based on the first audio sample, to obtain the trained second encoding network.

In some embodiments, the configuration request includes a heterogeneous network configuration request for the first encoding network, and the heterogeneous network configuration request is configured for indicating modification of second configuration data including at least one of: a network structure of the first encoding network and a number of parameters of the first encoding network.

In some embodiments, the determining module 5552 is further configured to modify second configuration data of the first encoding network in response to the heterogeneous network configuration request, to obtain the to-be-trained second encoding network.

In some embodiments, a generative adversarial network includes a generator and a discriminator, where the generator is a second audio encoding/decoding system, and the second audio encoding/decoding system includes the to-be-trained second encoding network and the first decoding network; and the training module 5553 is further configured to alternatively perform the following training tasks based on the generator and the discriminator in the generative adversarial network: training the generator based on the first audio sample, where the trained generator is configured to generate the reconstructed audio sample based on the audio sample; training the discriminator based on the second audio sample and the reconstructed audio sample, where the trained discriminator is configured to distinguish the audio sample from the reconstructed audio sample; and parameters of the discriminator remain unchanged when the generator is trained; parameters of the generator remain unchanged when the discriminator is trained; and the second encoding network in the trained generator is used as the trained second encoding network.

In some embodiments, the training module 5553 is further configured to perform network encoding on the first audio sample by using the to-be-trained second encoding network, to obtain an encoding feature of the first audio sample, and perform signal encoding on the encoding feature of the first audio sample, to obtain an audio bitstream sample of the first audio sample.

In some embodiments, the to-be-trained second encoding network includes a network structure of the first encoding network and a one-dimensional convolution layer; and the training module 5553 is further configured to perform network encoding on the first audio sample by using the network structure of the first encoding network included in the to-be-trained second encoding network, to obtain an initial encoding feature of the first audio sample; and perform convolution processing on the initial encoding feature by using the one-dimensional convolution layer included in the to-be-trained second encoding network, to obtain the encoding feature of the first audio sample.

In some embodiments, the training module 5553 is further configured to perform the following processing by using the network structure of the first encoding network included in the to-be-trained second encoding network: performing feature extraction on the first audio sample, to obtain an audio feature of the first audio sample; and performing residual processing on the audio feature by using at least one residual unit in the network structure, to obtain the initial encoding feature of the first audio sample.

In some embodiments, the training module 5553 is further configured to perform signal decoding on the audio bitstream sample of the first audio sample, to obtain an encoding feature estimation value corresponding to the audio bitstream sample; and perform network decoding on the encoding feature estimation value by using the first decoding network, to obtain the reconstructed audio sample.

In some embodiments, the training module 5553 is further configured to perform the following processing by using the first decoding network: performing residual processing on the encoding feature estimation value by using at least one residual unit included in the first decoding network, to obtain the audio feature estimation value corresponding to the audio bitstream sample; and performing feature reconstruction on the audio feature estimation value, to obtain the reconstructed audio sample corresponding to the audio bitstream sample.

In some embodiments, when the first audio sample is a low-frequency sub-band signal obtained by performing sub-band decomposition on the audio signal sample, the audio bitstream sample is a low-frequency bitstream sample corresponding to the audio signal sample; and when the first audio sample is the audio signal sample, the audio bitstream sample is a full-frequency bitstream sample corresponding to the audio signal sample.

The audio encoding apparatus 655 includes a series of modules, including a second acquiring module 6551, an encoding module 6552, and a signal encoding module 6553. The following further describes how all modules in the audio encoding apparatus 655 provided in this embodiment of this application cooperate to implement an audio encoding solution.

The second acquiring module 6551 is configured to acquire an audio signal; the encoding module 6552 is configured to invoke a trained second encoding network in an audio encoding/decoding system to perform network encoding on the audio signal, to obtain a second encoding feature of the audio signal, where the audio encoding/decoding system includes the trained second encoding network and a first decoding network; and the signal encoding module 6553 is configured to perform signal encoding on the second encoding feature of the audio signal to obtain a second audio bitstream of the audio signal, where both the first audio bitstream and the second audio bitstream can be decoded by the first decoding network to obtain a reconstructed audio signal corresponding to the audio signal, the first audio bitstream is obtained by processing the audio signal through the first encoding network, and the trained second encoding network is obtained by training the first encoding network by using the training method for the audio encoding/decoding system.

The audio decoding apparatus 755 includes a series of modules, including a third acquiring module 7551, a signal decoding module 7552, and a decoding module 7553. The following further describes how all modules in the audio decoding apparatus 555 provided in this embodiment of this application cooperate to implement an audio decoding solution.

The third acquiring module 7551 is configured to acquire an audio bitstream; the signal decoding module 7552 is configured to perform signal decoding on the audio bitstream to obtain an encoding feature estimation value corresponding to the audio bitstream; and the decoding module 7553 is configured to invoke the first decoding network in the audio encoding/decoding system to perform network decoding on the encoding feature estimation value, to obtain a reconstructed audio signal corresponding to the audio bitstream, where the audio encoding/decoding system includes a trained second encoding network and the first decoding network, the audio bitstream is obtained by processing the audio signal through the trained second encoding network or the first encoding network, and the trained second encoding network is obtained by training the first encoding network by using the training method for the audio encoding/decoding system.

An embodiment of this application provides a computer program product, the computer program product including a computer program or computer-executable instructions, the computer program or the computer-executable instructions being stored in a computer-readable storage medium. A processor of an electronic device reads the computer program or the computer-executable instructions from the computer-readable storage medium, and the processor executes the computer program or the computer-executable instructions, so that the electronic device performs the training method for the audio encoding/decoding system, the audio encoding method, and the audio decoding method in the embodiments of this application.

An embodiment of this application provides a computer-readable storage medium, having computer-executable instructions stored therein, the computer-executable instructions, when executed by a processor, enabling the processor to perform the training method for the audio encoding/decoding system, the audio encoding method, and the audio decoding method provided in the embodiments of this application, such as the training method for the audio encoding/decoding system shown in FIG. 4A.

In some embodiments, the computer-readable storage medium may be a memory such as a ferroelectric random access memory (FRAM), a read only memory (ROM), a programmable ROM (PROM), an electrically programmable ROM (EPROM), an electrically erasable PROM (EEPROM), a flash memory, a magnetic surface memory, an optical disk, or a compact disc read-only memory (CD-ROM), or may be various electronic devices including one of or any combination of the foregoing memories.

In some embodiments, the computer-executable instructions (abbreviated as executable instructions) may be written in any form of programming language (including a compiled or interpreted language, or a declarative or procedural language) in a form of a program, software, a software module, a script, or code, and may be deployed in any form, including being deployed as an independent program or being deployed as a module, a component, a subroutine, or another unit applicable for use in a computing environment.

For example, the executable instructions may, but do not necessarily, correspond to a file in a file system, and may be stored in a part of a file that saves another program or other data, for example, be stored in one or more scripts in a hypertext markup language (HTML) file, stored in a file that is specially configured for a program in discussion, or stored in the plurality of collaborative files (for example, be stored in files of one or modules, subprograms, or code parts).

For example, the executable instructions may be deployed to be executed on an electronic device, or deployed to be executed on a plurality of electronic devices at the same location, or deployed to be executed on a plurality of electronic devices that are distributed in a plurality of locations and interconnected by using a communication network.

During the application of the embodiments of this application in specific products or technologies, relevant data involving user information in the embodiments of this application need the permission or consent of the user, and the collection, use and processing of relevant data need to comply with relevant laws, regulations and standards of relevant countries and districts.

The foregoing descriptions are merely embodiments of this application, and are not intended to limit the protection scope of this application. Any modification, equivalent replacement, or improvement made without departing from the spirit and principle of this application shall fall within the protection scope of this application.

## Claims

1. A training method for an audio encoding/decoding system, applied to an electronic device, the method comprising:
acquiring a first audio encoding/decoding system, the first audio encoding/decoding system comprising a first encoding network and a first decoding network;
generating a to-be-trained second encoding network corresponding to the first encoding network in response to a configuration request for the first encoding network;
encoding a first audio sample using the to-be-trained second encoding network to obtain an audio bitstream sample of the first audio sample, and decoding the audio bitstream sample using the first decoding network to obtain a reconstructed audio sample of the first audio sample; and
updating parameters of the to-be-trained second encoding network based on the reconstructed audio sample to obtain a trained second encoding network.

2. The method according to claim 1, wherein
the configuration request comprises a homogeneous network configuration request for the first encoding network, and the homogeneous network configuration request is configured for indicating modification of first configuration data comprising at least one of: a second audio sample for training the first audio encoding/decoding system, and a training policy for training the first audio encoding/decoding system.

3. The method according to claim 2, wherein
when the homogeneous network configuration request is configured for indicating modification of the second audio sample, the first audio sample is a second audio sample modified based on the homogeneous network configuration request; and
when the homogeneous network configuration request is configured for indicating modification of the training policy, a modified training policy is configured for training the to-be-trained second encoding network based on the first audio sample, to obtain the trained second encoding network.

4. The method according to any one of claims 1 to 3, wherein
the configuration request comprises a heterogeneous network configuration request for the first encoding network, and the heterogeneous network configuration request is configured for indicating modification of second configuration data comprising at least one of: a network structure of the first encoding network, and a number of parameters of the first encoding network.

5. The method according to claim 4, wherein the generating a to-be-trained second encoding network corresponding to the first encoding network in response to a configuration request for the first encoding network comprises:
modifying the second configuration data of the first encoding network in response to the heterogeneous network configuration request, to obtain the to-be-trained second encoding network.

6. The method according to any one of claims 1 to 5, wherein
the to-be-trained second encoding network is trained in the following manner:
alternately performing the following training tasks based on a generator and a discriminator comprised in a generative adversarial network, wherein the generator is a second audio encoding/decoding system, and the second audio encoding/decoding system comprises the to-be-trained second encoding network and the first decoding network:
training the generator based on the first audio sample, wherein the trained generator is configured to generate a reconstructed audio sample based on the audio sample; and
training the discriminator based on the second audio sample and the reconstructed audio sample, wherein the trained discriminator is configured to distinguish the audio sample from the reconstructed audio sample;
wherein when the generator is trained, parameters of the discriminator remain unchanged; and when the discriminator is trained, parameters of the generator remain unchanged; and
the second encoding network in the trained second generator is used as the trained second encoding network.

7. The method according to any one of claims 1 to 6, wherein the encoding a first audio sample using the to-be-trained second encoding network to obtain an audio bitstream sample of the first audio sample comprises:
performing network encoding on the first audio sample by using the to-be-trained second encoding network, to obtain an encoding feature of the first audio sample; and
performing signal encoding on the encoding feature of the first audio sample, to obtain the audio bitstream sample of the first audio sample.

8. The method according to claim 7, wherein
the to-be-trained second encoding network comprises a network structure of the first encoding network and a one-dimensional convolution layer; and
the performing network encoding on the first audio sample by using the to-be-trained second encoding network, to obtain an encoding feature of the first audio sample comprises:
performing network encoding on the first audio sample by using the network structure of the first encoding network comprised in the to-be-trained second encoding network, to obtain an initial encoding feature of the first audio sample; and
performing convolution processing on the initial encoding feature by using the one-dimensional convolution layer comprised in the to-be-trained second encoding network, to obtain the encoding feature of the first audio sample.

9. The method according to claim 8, wherein the performing network encoding on the first audio sample by using the network structure of the first encoding network comprised in the to-be-trained second encoding network, to obtain an initial encoding feature of the first audio sample comprises:
performing the following processing by using the network structure of the first encoding network comprised in the to-be-trained second encoding network:
performing feature extraction on the first audio sample, to obtain an audio feature of the first audio sample; and
performing residual processing on the audio feature by using at least one residual unit in the network structure, to obtain the initial encoding feature of the first audio sample.

10. The method according to any one of claims 1 to 9, wherein the decoding the audio bitstream sample using the first decoding network to obtain a reconstructed audio sample of the first audio sample comprises:
performing signal decoding on the audio bitstream sample of the first audio sample, to obtain an encoding feature estimation value corresponding to the audio bitstream sample; and
performing network decoding on the encoding feature estimation value by using the first decoding network, to obtain the reconstructed audio sample.

11. The method according to claim 10, wherein the performing network decoding on the encoding feature estimation value by using the first decoding network, to obtain the reconstructed audio sample comprises:
performing the following processing by using the first decoding network:
performing residual processing on the encoding feature estimation value by using at least one residual unit comprised in the first decoding network, to obtain an audio feature estimation value corresponding to the audio bitstream sample; and
performing feature reconstruction on the audio feature estimation value, to obtain the reconstructed audio sample.

12. The method according to any one of claims 1 to 11, wherein
when the first audio sample is a low-frequency sub-band signal obtained by performing sub-band decomposition on the audio signal sample, the audio bitstream sample is a low-frequency bitstream sample corresponding to the audio signal sample; and
when the second audio sample is the audio signal sample, the audio bitstream sample is a full-frequency bitstream sample corresponding to the audio signal sample.

13. An audio encoding method, applicable to an electronic device, the method comprising:
acquiring an audio signal;
invoking a trained second encoding network in an audio encoding/decoding system to perform network encoding on the audio signal, to obtain a second encoding feature of the audio signal, the audio encoding/decoding system comprising the trained second encoding network and a first decoding network; and
performing signal encoding on the second encoding feature of the audio signal to obtain a second audio bitstream of the audio signal,
both the first audio bitstream and the second audio bitstream being decoded by the first decoding network to obtain a reconstructed audio signal corresponding to the audio signal, the first audio bitstream being obtained by processing the audio signal through the first encoding network, and the trained second encoding network being obtained by training the first encoding network by using the training method for an audio encoding/decoding system according to any one of claims 1 to 12.

14. An audio decoding method, applicable to an electronic device, the method comprising:
acquiring an audio bitstream;
performing signal decoding on the audio bitstream, to obtain an encoding feature estimation value corresponding to the audio bitstream; and
invoking a first decoding network in an audio encoding/decoding system to perform network decoding on the encoding feature estimation value, to obtain a reconstructed audio signal corresponding to the audio bitstream,
the audio encoding/decoding system comprising a trained second encoding network and the first decoding network, the audio bitstream being obtained by processing an audio signal through the trained second encoding network or a first encoding network, and the trained second encoding network being obtained by training the first encoding network through the training method for an audio encoding/decoding system according to any one of claims 1 to 12.

15. A training apparatus for an audio encoding/decoding system, comprising:
a first acquiring module, configured to acquire a first audio encoding/decoding system, the first audio encoding/decoding system comprising a first encoding network and a first decoding network;
a determining module, configured to generate a to-be-trained second encoding network corresponding to the first encoding network in response to a configuration request for the first encoding network; and
a training module, configured to encode a first audio sample using the to-be-trained second encoding network to obtain an audio bitstream sample of the first audio sample, and decode the audio bitstream sample using the first decoding network to obtain a reconstructed audio sample of the first audio sample; and
update parameters of the to-be-trained second encoding network based on the reconstructed audio sample to obtain a trained second encoding network.

16. An electronic device, comprising:
a memory, configured to store a computer program or computer-executable instructions; and
a processor, configured to implement the training method for an audio encoding/decoding system according to any one of claims 1 to 12, or the audio encoding method according to claim 13, or the audio decoding method according to claim 14 when executing the computer program or the computer-executable instructions stored in the memory.

17. A computer-readable storage medium, having computer-executable instructions stored therein, the computer-executable instructions, when executed by a processor, implementing the training method for an audio encoding/decoding system according to any one of claims 1 to 12, or the audio encoding method according to claim 13, or the audio decoding method according to claim 14.

18. A computer program product, comprising computer-executable instructions, the computer-executable instructions, when executed by a processor, implementing the training method for an audio encoding/decoding system according to any one of claims 1 to 12, or the audio encoding method according to claim 13, or the audio decoding method according to claim 14.
